# EUROPÄISCHE PATENTSCHRIFT

(11) **EP 2 358 566 B1**
(45) Veröffentlichungstag und Bekanntmachung des Hinweises auf die Patenterteilung: **10.07.2013**
(21) Anmeldenummer: 09759696.9
(22) Anmeldetag: 04.11.2009
(51) Int. Cl.: B60R 13/10

(54) **KRAFTFAHRZEUG-ANZEIGEVORRICHTUNG, KRAFTFAHRZEUG-ELEKTRONIKSYSTEM, KRAFTFAHRZEUG, VERFAHREN ZUR ANZEIGE VON DATEN UND COMPUTERPROGRAMMPRODUKT**
MOTOR VEHICLE DISPLAY DEVICE, MOTOR VEHICLE ELECTRONIC SYSTEM, MOTOR VEHICLE, METHOD FOR DISPLAYING DATA AND A COMPUTER PROGRAM PRODUCT
DISPOSITIF D AFFICHAGE POUR VÉHICULE AUTOMOBILE, SYSTÈME ÉLECTRONIQUE POUR VÉHICULE AUTOMOBILE, VÉHICULE AUTOMOBILE, PROCÉDÉ D AFFICHAGE DE DONNÉES ET PROGRAMME INFORMATIQUE

(30) Priorität: 18.11.2008 DE 102008043830
(43) Veröffentlichungstag der Anmeldung: 24.08.2011
(73) Patentinhaber: Bundesdruckerei GmbH, 10958 Berlin (DE)
(72) Erfinder: PAESCHKE, Manfred, 16348 Wandlitz (DE); DIETRICH, Frank, 12437 Berlin (DE); FISCHER, Jörg, 13053 Berlin (DE)
(74) Vertreter: Richardt Patentanwälte GbR
(86) Internationale Anmeldenummer: PCT/EP2009/064590
(87) Internationale Veröffentlichungsnummer: WO 2010/057771

(56) Entgegenhaltungen:
- WO-A-92/13737
- WO-A-2007/137555
- FR-A- 2 619 944
- US-A- 5 657 008
- US-A1- 2004 070 505

## Beschreibung

Die Erfindung betrifft eine Kraftfahrzeug-Anzeigevorrichtung, ein Kraftfahrzeug-Elektroniksystem, ein Kraftfahrzeug, ein Verfahren zur Anzeige von Daten sowie ein Computerprogrammprodukt.

Aus US 5,657,008 ist ein elektronisches Kraftfahrzeug-Kennzeichen bekannt, in dem eine Fahrzeug-Identifizierungsnummer gespeichert ist. Die Fahrzeug-Identifizierungsnummer dient zur Prüfung, ob das elektronische Kraftfahrzeug-Kennzeichen auch tatsächlich zu dem Kraftfahrzeug, an welchem es angebracht ist, gehört.

Aus gattungsgemäßer WO 2007/137555 A2 ist ein elektronisch konfigurierbares Kraftfahrzeug-Kennzeichen mit einem Display bekannt. Um das Kraftfahrzeug-Kennzeichen zu konfigurieren, werden Daten in einer externen Konfigurationseinheit zusammengestellt und verschlüsselt. Die verschlüsselten Daten werden von einem in die Konfigurationseinheit integrierten Infrarot-Sender als Infrarot-Signale ausgesendet. In der Anzeigeelektronik für das Kraftfahrzeug-Kennzeichen werden die Signale entschlüsselt, wofür eine entsprechende Entschlüsselungs-Software in der Anzeigeelektronik gespeichert ist.

Aus US 2007/0285361 A1 ist ein System für drahtlose elektronische Kraftfahrzeug-Kennzeichen bekannt. Die Eingabe von Daten in das elektronische Kraftfahrzeug-Kennzeichen ist nur hierzu autorisierten Personen möglich, und zwar mit Hilfe eines geheimen Codes.

Aus der zum Anmeldezeitpunkt unveröffentlichten Patentanmeldung DE 102008042259.2 (BUND.208.12 DE) derselben Anmelderin ist ein Kraftfahrzeug-Elektronikgerät bekannt, welches zum Empfang von Daten von einem ID-Token ausgebildet ist, sowie zur Ansteuerung einer Kraftfahrzeug-Anzeigevorrichtung zur Anzeige dieser Daten. Weitere Kraftfahrzeug-Anzeigevorrichtungen sind aus den ebenfalls zum Anmeldezeitpunkt unveröffentlichten Patentanmeldungen derselben Anmelderin BUND.208.14de und BUND.208.12 de (amtliche Aktz.: DE 102008043123.0 und DE 102008042259.2) bekannt.

Demgegenüber liegt der Erfindung die Aufgabe zugrunde, eine verbesserte Kraftfahrzeug-Anzeigevorrichtung, ein Kraftfahrzeug-Elektroniksystem, ein Kraftfahrzeug sowie ein Verfahren optischen Ausgabe und ein entsprechendes Computerprogrammprodukt zu schaffen.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Nach Ausführungsformen der Erfindung hat die Kraftfahrzeug-Anzeigevorrichtung ein elektronisches Gerät und eine Anzeigevorrichtung, die eine bauliche Einheit bilden. Beispielsweise kann das Format der Kraftfahrzeug-Anzeigevorrichtung in etwa den Abmessungen eines bislang im Stand der Technik üblichen Kraftfahrzeug-Nummernschildes entsprechen. Eine solche Kraftfahrzeug-Anzeigevorrichtung wird auch als elektronisches Kraftfahrzeug-Kennzeichen bezeichnet.

Das elektronische Gerät hat einen ersten Speicherbereich zur Speicherung von Daten sowie einen zweiten Speicherbereich zur Speicherung zumindest eines ersten Zertifikats. Ferner hat das elektronische Gerät eine erste Schnittstelle zum Empfang eines ersten Signals und einer Signatur des ersten Signals von einem Sender. Die erste Schnittstelle kann auch zum Empfang der Daten und einer Signatur der Daten sowie zumindest des ersten Zertifikats dienen. Das erste Signal, die Daten und deren jeweilige Signaturen und das erste Zertifikat können von demselben oder unterschiedlichen Sendern empfangen werden.

Das elektronische Gerät hat Mittel zur Prüfung der Gültigkeit der Signatur des ersten Signals mit Hilfe des ersten Zertifikats; diese Mittel zur Prüfung der Gültigkeit können auch zur Prüfung der Gültigkeit der Signatur der Daten mit Hilfe des ersten Zertifikats dienen.

Ferner hat das elektronische Gerät Mittel zur Generierung eines zweiten Signals mit Hilfe des ersten Signals und Mittel zur Ansteuerung der Anzeigevorrichtung zur Wiedergabe der in dem ersten Speicherbereich gespeicherten Daten und zur optischen Ausgabe des zweiten Signals.

Eine notwendige Voraussetzung für die die Generierung und/oder die optische Ausgabe des zweiten Signals ist, dass die Signatur des ersten Signals gültig ist. Nur wenn diese Voraussetzung erfüllt ist wird das zweite Signal mit Hilfe von Mitteln zur Ansteuerung der Anzeigevorrichtung optisch ausgegeben.

Eine notwendige Voraussetzung für die Speicherung der Daten in dem ersten Speicherbereich ist, dass die Signatur gültig ist. Nur dann werden diese Daten mit Hilfe von Mitteln zur Ansteuerung der Anzeigevorrichtung wiedergegeben.

Entsprechendes gilt für die Wiedergabe der Daten, wenn diese von einem Sender empfangen werden: Eine notwendige Voraussetzung für die Speicherung der Daten in dem ersten Speicherbereich ist, dass die Signatur der Daten gültig ist. Nur dann werden diese Daten mit Hilfe von Mitteln zur Ansteuerung der Anzeigevorrichtung wiedergegeben.

Ausführungsformen der Erfindung sind besonders vorteilhaft, da durch die Kraftfahrzeug-Anzeigevorrichtung ein elektronisches Kraftfahrzeug-Kennzeichen geschaffen wird, welches neben der Wiedergabe des Kraftfahrzeug-Kennzeichens zur optischen Ausgabe eines weiteren Signals, d.h. des zweiten Signals, dient. Das zweite Signal wird nur dann generiert und/oder über die Anzeigevorrichtung optisch ausgegeben, wenn zuvor über die erste Schnittstelle des elektronischen Geräts das erste Signal und dessen Signatur empfangen worden ist, und wenn diese Signatur des ersten Signals gültig ist.

Nach einer Ausführungsform der Erfindung wird mit dem ersten Signal eine Information von dem Sender empfangen. Diese Information kann unverändert in die Generierung des zweiten Signals eingehen, sodass die Information optisch über die Anzeigevorrichtung ausgegeben wird. Vor der Generierung des zweiten Signals kann die Information auch weiterverarbeitet werden, indem die Information beispielsweise ergänzt oder modifiziert wird. In diesem Fall wird das zweite Signal generiert, um das Ergebnis der Weiterverarbeitung der Information über die Anzeigevorrichtung auszugeben.

Nach einer Ausführungsform der Erfindung handelt es sich bei dem ersten Signal um ein Testsignal, welches zum Beispiel von einem in der Nähe des Kraftfahrzeugs befindlichen Streifenfahrzeug der Polizei abgesendet wird, um die Authentizität der Kraftfahrzeug-Anzeigevorrichtung zu prüfen. Aufgrund des Empfangs des Testsignals und dessen valider Signatur generiert z.B. die Kraftfahrzeug-Anzeigevorrichtung das zweite Signal und gibt dieses optisch aus. Diese optische Ausgabe wird zum Beispiel von einem Lesegerät des Streifenfahrzeugs erfasst und mit einem Referenzsignal verglichen. Wenn das zweite Signal und das Referenzsignal übereinstimmen, so ist eine Bedingung für die Authentizität der Kraftfahrzeug-Anzeigevorrichtung erfüllt.

Nach einer Ausführungsform der Erfindung beinhaltet das erste Signal ein Kommando, wie zum Beispiel ein Abfragekommando zur Abfrage einer bestimmten Information von der Kraftfahrzeug-Anzeigevorrichtung. Bei dieser Information kann es sich zum Beispiel um einen Fahrzeugparameter und/oder einen Gebührenstatus des Kraftfahrzeugs handeln.

Bei dem Fahrzeugparameter kann es sich zum Beispiel um die Geschwindigkeit des Kraftfahrzeugs, einen Lärmpegel oder einen Abgaswert handeln. Insbesondere kann durch das erste Signal abgefragt werden, welche Schadstoffklasse das Kraftfahrzeug erfüllt, insbesondere gemäß der anwendbaren Feinstaubverordnung.

Alternativ oder zusätzlich kann durch den Empfang des ersten Signals und dessen gültiger Signatur ein Gebührenstatus von der Kraftfahrzeug-Anzeigevorrichtung abgefragt werden. Hierdurch kann geprüft werden, ob für das Kraftfahrzeug die vorgeschriebenen Gebühren, Steuern und/oder Abgaben, insbesondere Mautgebühren, Kraftfahrzeugsteuern und/oder Abgasgebühren, bezahlt worden sind.

Nach einer Ausführungsform der Erfindung greift die Kraftfahrzeug-Anzeigevorrichtung aufgrund des Empfangs des Abfragekommandos auf einen Speicherbereich zu, in dem die abgefragte Information gespeichert ist. Der Inhalt dieses Speicherbereichs wird dann gelesen, um das zweite Signal zu generieren, welches die abgefragte Information trägt. Beispielsweise wird die in dem Speicherbereich der Kraftfahrzeug-Anzeigevorrichtung gespeicherte Information in regelmäßigen oder unregelmäßigen Zeitabständen aktualisiert.

Alternativ oder zusätzlich fragt die Kraftfahrzeug-Anzeigevorrichtung die Information ihrerseits von einem Kraftfahrzeug-Elektronikgerät, wie zum Beispiel einer sogenannten Electronic Control Unit (ECU) oder einem Sensor des Kraftfahrzeugs ab, beispielsweise indem die Kraftfahrzeug-Anzeigevorrichtung ein entsprechendes Abfragekommando über einen Kraftfahrzeugbus an die ECU bzw. den Sensor richtet.

Nach einer Ausführungsform der Erfindung erfolgt die Wiedergabe der Daten auf der Anzeigevorrichtung so, dass die Wiedergabe visuell und kognitiv von einem Benutzer erfassbar ist. Vorzugsweise erfolgt die Wiedergabe so, dass die Wiedergabe in etwa dem optischen Eindruck eines einem üblichen Kraftfahrzeug-Kennzeichen eingeprägten Kennzeichens entspricht. Die Ausgabe des zweiten Signals kann dagegen so erfolgen, dass sie je nach Ausführungsform visuell und kognitiv von einem Benutzer erfassbar ist, nur visuell aber nicht kognitiv von einem Benutzer erfassbar ist oder wieder visuell noch kognitiv von einem Benutzer erfassbar ist.

Beispielsweise kann die Ausgabe des zweiten Signals über die Anzeigevorrichtung durch Ansteuerung eines einzelnen Pixels oder einer Pixelgruppe der Anzeigevorrichtung mit dem zweiten Signal erfolgen, wobei dem zweiten Signal die optisch auszugebende Information aufmoduliert ist. Beispielsweise können der Pixel oder die Pixelgruppe in ihrer Helligkeit moduliert werden, um das zweite Signal auszugeben, wobei die Modulation so gewählt sein kann, dass sie für einen Benutzer visuell nicht wahrnehmbar ist, beispielsweise weil die Helligkeitsschwankungen so gering sind, dass sie mit dem bloßen Auge nicht wahrnehmbar sind.

Ausführungsformen der Erfindung sind besonders vorteilhaft, da über die erste Schnittstelle das erste Zertifikat empfangen werden kann, welches eine Aktualisierung des oder der in dem elektronischen Gerät gespeicherten Zertifikate ermöglicht. Die Zertifikate einer Public Key Infrastructure (PKI) haben nämlich üblicherweise eine begrenzte Gültigkeit von zum Beispiel zwei bis drei Jahren. Nach Ablauf dieser Gültigkeitsdauer muss also eine Aktualisierung des oder der Zertifikate erfolgen, was erfindungsgemäß über die Schnittstelle des elektronischen Geräts vorgenommen werden kann.

Nach einer Ausführungsform der Erfindung handelt es sich bei dem ersten Zertifikat um ein sogenanntes Root-Zertifikat, mit Hilfe dessen eine Zertifikatskettenprüfung für die Prüfung der Gültigkeit der Signatur der Daten durchgeführt werden kann.

Nach einer Ausführungsform der Erfindung handelt es sich bei dem elektronischen Gerät um eine integrierte elektronische Schaltung, wie zum Beispiel einen sogenannten RFID-Chip.

Die erste Schnittstelle des elektronischen Geräts kann zum drahtlosen Empfang des ersten Signals, der Signatur des ersten Signals, der Daten, der Signatur der Daten und/oder des ersten Zertifikats von einem externen Sender ausgebildet sein. Alternativ oder zusätzlich kann die erste Schnittstelle auch so ausgebildet sein, dass das erste Signal, die Signatur des ersten Signals, die Daten, die Signatur des ersten Signals und/oder das erste Zertifikat von einem internen Sender, der zu dem Kraftfahrzeug gehört, empfangen werden können, wie zum Beispiel von einem Kraftfahrzeug-Elektronikgerät, insbesondere einer sogenannten Electronic Control Unit (ECU).

Nach einer Ausführungsform der Erfindung sind das elektronische Gerät und die Anzeigevorrichtung untrennbar miteinander verbunden, sodass eine zerstörungsfreie Trennung des elektronischen Geräts und der Anzeigevorrichtung nicht möglich ist. Beispielsweise sind hierzu das elektronische Gerät und die Anzeigevorrichtung durch eine Vergussmasse so innig miteinander verbunden, dass der Versuch einer Trennung zwangsläufig zur Zerstörung des elektronischen Geräts und/oder der Anzeigevorrichtung führt.

Nach einer Ausführungsform der Erfindung beinhaltet das elektronische Gerät Mittel zur kryptografischen Authentifizierung des Senders, beispielsweise nach einem sogenannten Challenge-Response-Protokoll. Eine Speicherung der von dem Sender empfangenen Daten in dem ersten Speicherbereich erfolgt nur dann, wenn eine solche kryptografische Authentifizierung erfolgreich durchgeführt worden ist.

Nach einer Ausführungsform der Erfindung beinhaltet das elektronische Gerät Mittel zur gegenseitigen kryptografischen Authentifizierung des elektronischen Geräts und des Senders. Hierdurch wird sichergestellt, dass der Sender die Daten nur an ein valides elektronisches Gerät absendet.

Nach einer weiteren Ausführungsform der Erfindung hat das elektronische Gerät einen Speicherbereich zur Speicherung eines Kraftfahrzeug-Identifikators. Bei dem Kraftfahrzeug-Identifikator handelt es sich um einen Identifikator, durch den ein Kraftfahrzeug eindeutig identifiziert wird, wie zum Beispiel die Fahrgestellnummer des Kraftfahrzeugs. Durch den in dem Speicherbereich gespeicherten Kraftfahrzeug-Identifikator wird die Kraftfahrzeug-Anzeigevorrichtung eindeutig dem Kraftfahrzeug mit demselben Kraftfahrzeug-Identifikator zugeordnet. Diese Zuordnung kann so ausgebildet sein, dass sie unveränderlich ist. Eine weitere Voraussetzung für die Generierung und/oder Ausgabe des zweiten Signals und/oder die Speicherung der Daten in dem ersten Speicherbereich für deren Anzeige auf der Anzeigevorrichtung kann dann sein, dass über die erste Schnittstelle eine Kennung empfangen wird, welche mit dem Kraftfahrzeug-Identifikator, der in dem Speicherbereich gespeichert ist, identisch ist.

Nach einer weiteren Ausführungsform der Erfindung handelt es sich bei der Kraftfahrzeug-Anzeigevorrichtung um ein elektronisches Kraftfahrzeug-Kennzeichen, d.h. ein Kraftfahrzeug-Kennzeichen, welches mit einem Display ausgestattet ist, auf welchem das amtliche Kennzeichen des Kraftfahrzeugs wiedergeben wird.

In einem weiteren Aspekt betrifft die Erfindung ein Kraftfahrzeug-Elektroniksystem mit einer Ausführungsform der erfindungsgemäßen Kraftfahrzeug-Anzeigevorrichtung und einem Kraftfahrzeug-Elektronikgerät.

Nach Ausführungsformen der Erfindung hat das Kraftfahrzeug-Elektronikgerät eine zweite Schnittstelle zum Aufbau einer ersten Verbindung zu einem externen Sender, wie z.B. einem ersten ID-Token, um aus dem ersten ID-Token Daten auszulesen. Bei dem ersten ID-Token kann es sich um ein Dokument, insbesondere ein Wert- oder Sicherheitsdokument, handeln, in welches ein elektronischer Speicher und eine Schnittstelle für den Aufbau der Verbindung zu der zweiten Schnittstelle des Kraftfahrzeug-Elektronikgeräts integriert sind. Insbesondere kann in das Dokument ein RFID-Chip integriert sein, in dem die Daten gespeichert sind.

Unter einem "Dokument" werden erfindungsgemäß papierbasierte und/oder kunststoffbasierte Dokumente verstanden, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente wie Dienstausweise sowie auch Chipkarten, Zahlungsmittel, insbesondere Bankkarten und Kreditkarten, Frachtbriefe oder sonstige Berechtigungsnachweise, in die ein Datenspeicher zur Speicherung zumindest eines Attributs integriert ist.

Bei dem Dokument kann es sich vorzugsweise um einen elektronischen Fahrzeugschein oder Fahrzeugbrief oder ein anderes Kraftfahrzeugdokument handeln.

Das Kraftfahrzeug-Elektronikgerät hat einen Speicher zur Speicherung eines Zertifikats einer Public-Key-Infrastruktur (PKI). Beispielsweise kann das Zertifikat dem X.509 Standard entsprechen. In demselben oder einem anderen Speicher des Kraftfahrzeug-Elektronikgeräts kann ferner ein sogenanntes Root-Zertifikat dieser PKI gespeichert sein. Das Zertifikat und das Root-Zertifikat haben typischerweise eine begrenzte Gültigkeitsdauer, die in dem Zertifikat bzw. dem Root-Zertifikat angegeben ist.

Das Kraftfahrzeug-Elektronikgerät hat ferner Mittel zur Authentifizierung gegenüber dem ersten ID-Token mit Hilfe des Zertifikats. Beispielsweise erfolgt die Authentifizierung mit Hilfe eines Challenge-Response-Verfahrens. Hierzu überträgt das Kraftfahrzeug-Elektronikgerät sein Zertifikat über die erste Verbindung an den ersten ID-Token. Dieser generiert eine Challenge, beispielsweise in der Form einer Zufallszahl, welche der erste ID-Token mit dem öffentlichen Schlüssel des Zertifikats verschlüsselt und das Chiffrat über die erste Verbindung an das Kraftfahrzeug-Elektronikgerät überträgt. Das Kraftfahrzeug-Elektronikgerät muss dann über den privaten Schlüssel verfügen, der dem Zertifikat zugeordnet ist, um dieses Chiffrat korrekt entschlüsseln zu können.

Optional kann vorgesehen sein, dass sich auch der erste ID-Token gegenüber dem Kraftfahrzeug-Elektronikgerät authentifizieren muss, bevor die Daten aus dem ersten ID-Token ausgelesen werden. Dies kann in analoger Weise zu der Authentifizierung des Kraftfahrzeug-Elektronikgeräts gegenüber dem ID-Token geschehen. Beispielsweise wird also so vorgegangen, dass der ID-Token sein Zertifikat an das Kraftfahrzeug-Elektronikgerät über die erste Verbindung überträgt und danach das Challenge-Response Verfahren durchgeführt wird. Für die Prüfung der Validität des Zertifikats des ersten ID-Tokens kann das Kraftfahrzeug-Elektronikgerät das Root-Zertifikat verwenden.

Bei dem externen Sender kann es sich auch um einen stationären oder mobilen Sender z.B. einer Behörde oder der Polizei handeln, der das erste Signal absendet. Die zweite Schnittstelle dient dann zum Empfang des ersten Signals von einem solchen externen Sender.

Zum Empfang des ersten Signals von dem externen Sender wird also zunächst die erste Verbindung zwischen dem Kraftfahrzeug-Elektronikgerät und dem ersten Sender aufgebaut. Mit Hilfe des Zertifikats des Kraftfahrzeug-Elektronikgeräts erfolgt eine einseitige oder gegenseitige kryptografische Authentifizierung des Kraftfahrzeug-Elektronikgeräts und des externen Senders. Nachdem die Authentifizierung erfolgreich durchgeführt worden ist, sendet der externe Sender das erste Signal und die Signatur des ersten Signals über die erste Verbindung an das Kraftfahrzeug-Elektronikgerät. Die Überprüfung der Gültigkeit der Signatur des ersten Signals und/oder die Generierung des zweiten Signals, wenn die Signatur des ersten Signals gültig ist, kann durch das Kraftfahrzeug-Elektronikgerät erfolgen. In diesem Fall sendet das Kraftfahrzeug-Elektronikgerät das zweite Signal an die Kraftfahrzeug-Anzeigevorrichtung, sodass das zweite Signal optisch von der Kraftfahrzeug-Anzeigevorrichtung ausgegeben wird. Alternativ leitet das Kraftfahrzeug-Elektronikgerät das erste Signal und dessen Signatur an die Kraftfahrzeug-Anzeigevorrichtung weiter, sodass dort die Prüfung der Signatur des ersten Signals und gegebenenfalls die Generierung des zweiten Signals erfolgt.

Nach einer Ausführungsform der Erfindung wird das zweite Signal von der Kraftfahrzeug-Anzeigevorrichtung und/oder von dem Kraftfahrzeug-Elektronikgerät signiert. Zusätzlich zu dem zweiten Signal wird dann auch die Signatur des zweiten Signals über die Anzeigevorrichtung optisch ausgegeben. Hierdurch wird ein weiterer Schutz gegen eine unerlaubte Verfälschung oder Nachstellung des zweiten Signals geschaffen.

Nach einer Ausführungsform der Erfindung verfügt das Kraftfahrzeug-Elektronikgerät über Mittel zur Ansteuerung zumindest einer erfindungsgemäßen Kraftfahrzeug-Anzeigevorrichtung zur Wiedergabe der Daten. Beispielsweise sind zwei Anzeigevorrichtungen vorhanden, die anstelle der üblichen Nummernschilder vorne und hinten an einem Kraftfahrzeug angeordnet sind. Die Anzeigevorrichtungen haben zumindest je ein Display, wobei verschiedene Displaytechnologien zum Einsatz kommen können.

Beispielsweise sind die Displays so ausgebildet, dass die Wiedergabe der Daten auch ohne ständige Energieversorgung erfolgen kann. Solche Displays benötigen nur dann elektrische Energie, wenn sich die wiederzugebenden Daten ändern.

Hierbei handelt es sich beispielsweise um bistabile Displays, wie zum Beispiel elektrophoretische Anzeigen, elektrochrome Anzeigen, Drehelementanzeigen, ferroelektrische Anzeigen, Anzeigen auf der Basis des Elektrowetting-Effekts sowie bistabile LCD-Anzeigen, zum Beispiel twisted nematic, super twisted nematic, cholesterische oder nematische LCD-Anzeigen. Dabei kann es sich ferner auch um Hybridanzeigen handeln, die verschiedene dieser Anzeigetechnologien miteinander kombinieren.

Ferner sind aus dem Stand der Technik flexible, bistabile Displays bekannt, die von der Firma Citala kommerziell erhältlich sind. Solche Anzeigen sind auch aus US 2006/0250534 A1 bekannt. Weitere bistabile elektrophoretische Anzeigen sind beispielsweise aus WO 99/53371 und EP 1 715 374 A1 bekannt.

Bistabile Displays werden auch als "Electronic Paper Display" (EPD) bezeichnet.

Solchen bistabilen Displays haben im Allgemeinen den Vorteil, dass sie sich bei heller Beleuchtung sehr gut lesen lassen, und dass keine Energieversorgung erforderlich ist, um über lange Zeit gleich bleibende Bilddaten wiederzugeben.

Es können auch emissive Displays zum Einsatz kommen, die zur Wiedergabe der Daten eine Energieversorgung benötigen. Hierbei kann es sich zum Beispiel um LED-Anzeigen, insbesondere anorganische, organische oder Hybrid-LED-Anzeigen handeln. Die Anzeigevorrichtung kann auch auf der Basis eines elektrolumineszierenden Mediums realisiert sein, wie es zum Beispiel an sich aus der US 2002/0079494 A1 und US 6,091,194 bekannt ist.

Die Anzeigevorrichtung kann auch ganz oder teilweise drucktechnisch aufgebracht sein und so eine innige und nicht lösbare Verbindung mit dem Kraftfahrzeug bzw. mit Teilen des Kraftfahrzeuges bilden. Die Herstellung beispielsweise von TFTs durch direktes Aufbringen mit Hilfe von Drucktechnik ist an sich bekannt aus WO 03/098696 A1.

Das Kraftfahrzeug-Elektronikgerät hat ferner eine dritte Schnittstelle zur Speicherung des Zertifikats in dem Speicher. Über die dritte Schnittstelle kann also auf den Speicher des Kraftfahrzeug-Elektronikgeräts zugegriffen werden, um das Zertifikat dorthin zu übertragen und zu speichern, beispielsweise um bei einem neuen Kraftfahrzeug das Zertifikat erstmals in den Speicher einzubringen oder um das Zertifikat zu aktualisieren.

Nach einer Ausführungsform der Erfindung beinhalten die Daten, die über die zweite Schnittstelle von dem ersten ID-Token ausgelesen werden, das amtliche Kraftfahrzeug-Kennzeichen für das Kraftfahrzeug. Beispielsweise hat sich das Kraftfahrzeug-Kennzeichen aufgrund einer Ummeldung bei einer Kraftfahrzeug-Meldestelle geändert. Das geänderte Kraftfahrzeug-Kennzeichen wird von der Meldestelle in dem ersten ID-Token gespeichert. Dies kann online erfolgen, indem eine sichere Verbindung zwischen dem ersten ID-Token und einem Servercomputer aufgebaut wird, über die die Daten mit dem neuen Kraftfahrzeug-Kennzeichen in den ersten ID-Token geschrieben werden. Eine solche sichere Verbindung kann zum Beispiel mittels Ende-zu-Ende-Verschlüsselung über einen Client-Computer, an den ein Lesegerät für den ersten ID-Token angeschlossen ist, realisiert werden. Die Daten mit dem neuen amtlichen Kraftfahrzeug-Kennzeichen können von der Kraftfahrzeug-Meldestelle signiert sein.

Ausführungsformen der vorliegenden Erfindung sind besonders vorteilhaft, da eine vollständig elektronische Abwicklung der Aktualisierung des amtlichen Kraftfahrzeug-Kennzeichens ermöglicht wird. Insbesondere ist die Herstellung und Anbringung von neuen Nummernschildern nicht mehr notwendig. Hierdurch können in erheblichen Maßen Ressourcen eingespart werden und Abfall vermieden werden. Ferner erübrigen sich auch die bislang mit der Ausstellung von neuen Kraftfahrzeug-Nummemschildern verbundenen Behördengänge.

Ausführungsformen der vorliegenden Erfindung sind besonders vorteilhaft, da die Aktualisierung des amtlichen Kraftfahrzeug-Kennzeichens durch Übertragung der Daten vom dem ersten ID-Token an das Kraftfahrzeug-Elektronikgerät auf besonders sichere Art und Weise bei maximaler Bequemlichkeit für den Nutzer erfolgt. Dies wird durch den Einsatz kryptographischer Verfahren basierend auf einer PKI erreicht, beispielsweise zur einseitigen oder gegenseitigen Authentifizierung des Kraftfahrzeug-Elektronikgeräts und des ersten ID-Tokens und/oder durch Prüfung der Signatur der von dem ersten ID-Token empfangenen Daten durch das Kraftfahrzeug-Elektronikgerät und/oder durch einen kryptographischen Schutz der ersten Verbindung, über die die Daten von dem ersten ID-Token durch das Kraftfahrzeug-Elektronikgerät empfangen werden.

Nach einer Ausführungsform der Erfindung ist die zweite Schnittstelle des Kraftfahrzeug-Elektronikgeräts kontaktlos ausgebildet, beispielsweise als Funk-Schnittstelle, insbesondere als kontaktlose Schnittstelle, die nach einem RFID-Verfahren arbeitet. Insbesondere kann die zweite Schnittstelle so ausgebildet sein, dass über sie auch ein elektronischer Schlüssel des Kraftfahrzeugs angesprochen wird. Bei dem elektronischen Schlüssel kann es sich zum Beispiel um eine Chipkarte handeln, wie zum Beispiel eine RFID-Chipkarte. Es kann aber auch eine weitere Schnittstelle zur Kommunikation mit dem elektronischen Schlüssel vorhanden sein, insbesondere eine RFID Schnittstelle.

Nach einer Ausführungsform der Erfindung ist die dritte Schnittstelle des Kraftfahrzeug-Elektronikgeräts kontaktbehaftet ausgebildet. Beispielsweise ist die dritte Schnittstelle zum Anschluss eines Kabels vorgesehen. Insbesondere kann das Kraftfahrzeug-Elektronikgerät als sogenannte Electronic Control Unit (ECU) des Kraftfahrzeugs ausgebildet sein. Für Diagnose- und/oder Wartungszwecke wird die ECU mit einem externen Gerät, beispielsweise einem Terminal, einer Kraftfahrzeug-Werkstatt oder einer technischen Prüfstelle verbunden. Über dieses Kabel kann dann zwischen dem externen Gerät und der ECU eine Verbindung aufgebaut werden, über die das Zertifikat in dem Speicher gespeichert werden kann, um es beispielsweise zu aktualisieren. Dies kann beispielsweise anlässlich einer Wartung des Kraftfahrzeugs oder anlässlich einer sogenannten Hauptuntersuchung des Kraftfahrzeugs vorgenommen werden.

Nach einer Ausführungsform der Erfindung ist die dritte Schnittstelle zur Ausbildung einer Netzwerkverbindung vorgesehen, was kontaktbehaftet oder kontaktlos erfolgen kann. Beispielsweise ist die dritte Schnittstelle als Mobilfunk-Schnittstelle nach einem Mobilfunkstandard ausgebildet, sodass das Zertifikat über Mobilfunk empfangen werden kann.

Nach einer Ausführungsform der Erfindung wird über die dritte Schnittstelle zunächst ein eindeutiger Kraftfahrzeug-Identifikator, der in dem Kraftfahrzeug-Elektronikgerät gespeichert ist, abgefragt. Bei dem Kraftfahrzeug-Identifikator kann es sich zum Beispiel um die Fahrgestellnummer des Kraftfahrzeugs handeln. Mit Hilfe dieses Kraftfahrzeug-Identifikators wird dann ein Zertifikat generiert oder abgerufen, welches zu dem betreffenden Kraftfahrzeug oder dessen Anzeigevorrichtung gehört.

Nach einer Ausführungsform der Erfindung ist die zweite Schnittstelle zur Kommunikation mit einem zweiten ID-Token ausgebildet. Der zweite ID-Token dient zur Zugangskontrolle für das Kraftfahrzeug. Der Besitz des zweiten ID-Tokens ist Voraussetzung dafür, dass sich das Kraftfahrzeug von dem Benutzer öffnen und/oder starten lässt. Beispielsweise handelt es sich bei dem zweiten ID-Token um eine RFID-Chipkarte, welche als elektronischer Schlüssel ("E-Schlüssel") dient.

In dem zweiten ID-Token ist ein Schlüssel-Identifikator gespeichert. Dieser Schlüssel-Identifikator wird von dem Kraftfahrzeug-Elektronikgerät über dessen zweite Schnittstelle von dem zweiten ID-Token abgefragt. Wenn der aus dem zweiten ID-Token über die zweite Schnittstelle empfangene Schlüssel-Identifikator zu einem in dem Kraftfahrzeug-Elektronikgerät gespeicherten Referenzwert des Schlüssel-Identifikators passt, generiert das Kraftfahrzeug-Elektronikgerät ein Signal, um zum Beispiel die Zentralverriegelung des Kraftfahrzeugs zu entriegeln und/oder das Starten des Motors des Kraftfahrzeugs freizugeben.

Statt der zweiten Schnittstelle kann auch eine weitere Schnittstelle für die Kommunikation zwischen dem Kraftfahrzeug-Elektronik-Gerät und zweiten ID-Token vorhanden sein, z.B. eine weitere RFID-Schnittstelle, die eine größere Reichweite als die zweite Schnittstelle hat. Die Reichweite der weiteren Schnittstelle ist so gewählt, dass der zweite ID-Token von dem Kraftfahrzeug-Elektronikgerät erfasst wird, wenn sich der zweite ID-Token noch außerhalb des Kraftfahrzeugs befindet, wohingegen die Reichweite der zweiten Schnittstelle so gewählt ist, dass sich der erste ID-Token innerhalb der Kraftfahrzeuginnenraums befinden muss, damit die erste Verbindung aufgebaut werden kann. Voraussetzung für die Aktualisierung des Kraftfahrzeug-Kennzeichens ist dann also, dass zunächst der Nutzer das Kraftfahrzeug entriegeln und einsteigen muss.

Vorzugsweise wird als Schlüssel-Identifikator nicht der Kraftfahrzeug-Identifikator gewählt. Dies hat den Vorteil, dass bei einem Verlust des zweiten ID-Tokens dieser zweite ID-Token durch einen anderen ersetzt werden kann, indem ein anderer Schlüssel-Identifikator gespeichert ist. Die zweite Schnittstelle des Kraftfahrzeug-Elektronikgeräts ist vorzugsweise so ausgebildet, dass hierüber auf den Speicherbereich des Kraftfahrzeug-Elektronikgeräts zugegriffen werden kann, in dem der Schlüssel-Identifikator gespeichert ist, um den dort gespeicherten Schlüssel-Identifikator des verlorengegangenen zweiten ID-Tokens durch den neuen Schlüssel-Identifikator des neuen zweiten ID-Tokens zu ersetzen. Beispielsweise ist der neue Schlüssel-Identifikator signiert, wobei das Kraftfahrzeug-Elektronikgerät die Validität der Signatur prüft, bevor der alte Schlüssel-Identifikator durch den neuen Schlüssel-Identifikator ersetzt wird.

Nach einer Ausführungsform der Erfindung hat das Kraftfahrzeug-Elektronikgerät Mittel zum Aufbau eines gesicherten Datenübertragungskanals zur Ansteuerung der zumindest einen Kraftfahrzeug-Anzeigevorrichtung. Beispielsweise erfolgt die Datenübertragung über diesen Datenübertragungskanal verschlüsselt, um eine Manipulation der Ansteuerung der zumindest einen Anzeigevorrichtung zu unterbinden.

In einem weiteren Aspekt betrifft die Erfindung ein Kraftfahrzeug mit zumindest einer von außen sichtbar an dem Kraftfahrzeug angeordneten Kraftfahrzeug-Anzeigevorrichtung.

Nach einer Ausführungsform der Erfindung beinhaltet das Kraftfahrzeug eine Ausführungsform des erfindungsgemäßen Kraftfahrzeug-Elektroniksystems. Ein solches Kraftfahrzeug ist besonders vorteilhaft, da eine Aktualisierung des amtlichen Kennzeichens in zugleich bequemer und sicherer Art und Weise erfolgen kann. Insbesondere ist besonders vorteilhaft, dass der bisher erforderliche Austausch der Nummernschilder bei einem Wechsel des amtlichen Kennzeichens des Kraftfahrzeugs erfindungsgemäß vermieden werden kann, wodurch die Herstellungskosten der neuen Nummernschilder, der logistische Aufwand für deren Bereitstellung sowie auch die Kosten für die Entsorgung der alten Nummernschilder entfallen können.

In einem weiteren Aspekt betrifft die Erfindung ein Verfahren zur Anzeige von Daten auf einer Ausführungsform einer erfindungsgemäßen Kraftfahrzeug-Anzeigevorrichtung. Eine notwendige Voraussetzung für die Anzeige der Daten ist, dass die Daten signiert von einem Sender empfangen werden, und dass diese Signatur gültig ist. Zur Prüfung der Gültigkeit der Signatur wird ein in einem Speicherbereich der Kraftfahrzeug-Anzeigevorrichtung gespeichertes Zertifikat, insbesondere ein sogenanntes Root-Zertifikat, verwendet. Eine Aktualisierung des Root-Zertifikats erfolgt über die Schnittstelle der Kraftfahrzeug-Anzeigevorrichtung, beispielsweise anlässlich einer turnusmäßigen Wartung und/oder anlässlich einer sogenannten Hauptuntersuchung.

In einem weiteren Aspekt betrifft die Erfindung ein Computerprogrammprodukt mit ausführbaren Instruktionen zur Durchführung einer Ausführungsform eines erfindungsgemäßen Verfahrens. Beispielsweise ist das Computerprogramm zur Ausführung durch einen Mikroprozessor des elektronischen Geräts der Kraftfahrzeug-Anzeigevorrichtung ausgebildet.

Im Weiteren werden Ausführungsformen der Erfindung mit Bezugnahme auf die Zeichnungen näher erläutert. Es zeigen:
- Figur 1: ein Blockdiagramm einer ersten Ausführungsform einer erfindungsgemäßen Kraftfahrzeug-Anzeigevorrichtung,
- Figur 2: ein Flussdiagramm einer Ausführungsform eines erfindungsgemäßen Verfahrens,
- Figur 3: ein Blockdiagramm einer weiteren Ausführungsform einer erfindungsgemäßen Kraftfahrzeug-Anzeigevorrichtung,
- Figur 4: ein Blockdiagramm einer Ausführungsform eines erfindungsgemäßen Kraftfahrzeug-Elektroniksystems und eines erfindungsgemäßen Kraftfahrzeugs,
- Figur 5: ein Blockdiagramm einer weiteren Ausführungsform eines erfindungsgemäßen Kraftfahrzeug-Elektroniksystems und eines erfindungsgemäßen Kraftfahrzeugs.

Einander entsprechende Elemente der nachfolgenden Ausführungsformen werden jeweils mit demselben Bezugszeichen gekennzeichnet.

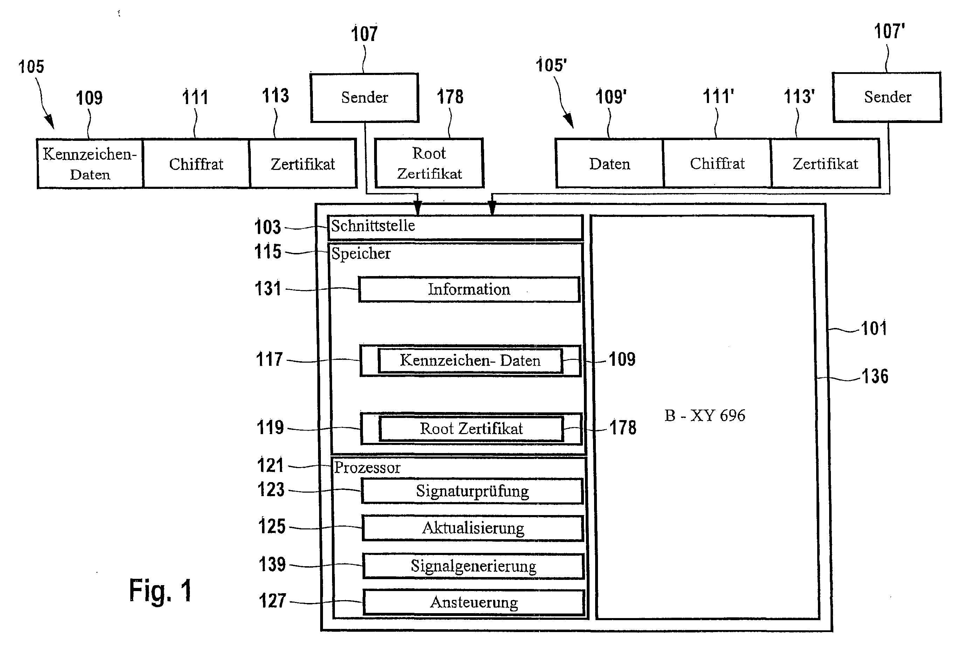

Die Figur 1 zeigt eine Ausführungsform einer erfindungsgemäßen Kraftfahrzeug-Anzeigevorrichtung 101. Die Kraftfahrzeug-Anzeigevorrichtung 101 hat eine Anzeige, d.h. ein sogenanntes Display 136, welches in etwa das Format eines üblichen Kraftfahrzeug-Nummernschildes haben kann. Das Display 136 dient zur Wiedergabe des amtlichen Kennzeichens, wie zum Beispiel des amtlichen Kennzeichens B - YX 696.

Die Kraftfahrzeug-Anzeigevorrichtung 101 hat eine Schnittstelle 103 zum Empfang zum Beispiel einer Nachricht 105 von einem Sender 107. Die Nachricht 105 kann zum Beispiel die auf dem Display 136 wiederzugebenden Daten 109, d.h. die Kennzeichendaten, ein Chiffrat 111 und ein Zertifikat 113 beinhalten. Durch das Chiffrat 111 und das Zertifikat 113 werden eine digitale Signatur der Daten 109 gebildet. Beispielsweise wird das Chiffrat 111 durch Verschlüsselung der Kennzeichendaten mit Hilfe eines privaten kryptografischen Schlüssels erzeugt, wobei dieser private kryptografische Schlüssel dem in dem Zertifikat 113 angegebenen öffentlichen Schlüssel zugeordnet sein muss.

Über die Schnittstelle 103 kann ferner ein sogenanntes Root-Zertifikat 178 empfangen werden.

Die Kraftfahrzeug-Anzeigevorrichtung 101 hat einen elektronischen Speicher 115 mit einem Speicherbereich 117 zur Speicherung der Kennzeichendaten und einen Speicherbereich 119 zur Speicherung des Root-Zertifikats 178.

Die Kraftfahrzeug-Anzeigevorrichtung 101 hat ferner einen Prozessor 121 zur Ausführung eines Programmmoduls 123 für die Durchführung einer Signaturprüfung, eines Programmmoduls 125 für die Aktualisierung des Root-Zertifikats 178, welches in dem Speicherbereich 119 gespeichert ist, sowie eines Programmmoduls 127 zur Ansteuerung des Displays 136. Die Funktionalität der Ansteuerung des Displays 136 kann mit Hilfe eines Treibers realisiert sein, welcher Teil des Prozessors 121, als separate Komponente oder als integraler Bestandteil des Displays 136 ausgebildet sein kann.

Das Root-Zertifikat 178 hat eine definierte Gültigkeitsdauer von zum Beispiel drei Jahren. Das aktuelle Root-Zertifikat 178 kann initial beispielsweise herstellerseitig in dem Speicherbereich 119 gespeichert werden, sodass ein mit der Kraftfahrzeug-Anzeigevorrichtung 101 ausgestattetes Kraftfahrzeug bei Auslieferung an den Kunden bereits mit einem gültigen Root-Zertifikat versehen ist.

Dem Kraftfahrzeug wird zum Beispiel von einer Kraftfahrzeug-Meldebehörde ein amtliches Kennzeichen zugeordnet. Die entsprechenden Daten 109 werden mit dem privaten Schlüssel, zum Beispiel der Kraftfahrzeug-Meldestelle, verschlüsselt, sodass das Chiffrat 111 resultiert. Die Nachricht 105 mit den Daten 109, dem Chiffrat 111 sowie dem Zertifikat 113 der Kraftfahrzeug-Meldestelle wird dann von dem Sender 107 an die Schnittstelle 103 der Kraftfahrzeug-Anzeigevorrichtung 101 gesendet. Daraufhin wird das Programmmodul 123 gestartet, um die Signatur der Nachricht 105 zu prüfen. Hierzu werden im Einzelnen die folgenden Prüfungen durchgeführt:
1. Das Chiffrat 111 wird mit Hilfe des in dem Zertifikat 113 angegebenen öffentlichen Schlüssels entschlüsselt. Das Resultat der Entschlüsselung des Chiffrats 111 muss mit den Daten 109 übereinstimmen, damit die Signatur gültig sein kann.
2. Das Zertifikat 113 wird mit Hilfe des in den Speicherbereich 119 gespeicherten Root-Zertifikats 178 einer Zertifikatskettenprüfung unterzogen. Eine erfolgreiche Zertifikatskettenprüfung ist eine weitere Voraussetzung für die Gültigkeit der Signatur.

Wenn die Signatur der Nachricht 105 gültig ist, so werden die Daten 109 in den Speicherbereich 117 geschrieben, wobei hierdurch in dem Speicherbereich 117 unter Umständen zuvor gespeicherte Kennzeichendaten überschrieben werden.

Das Programmmodul 127 wird ständig ausgeführt und greift auf den Speicherbereich 117 zu, in dem die jeweils aktuellen Daten 109 gespeichert sind. Durch die Aktualisierung der Kennzeichendaten in dem Speicherbereich 117 ändert sich also dementsprechend das auf dem Display 136 wiedergegebene amtliche Kennzeichen des Kraftfahrzeugs.

Da das Root-Zertifikat, das in dem Speicherbereich 119 gespeichert ist, nur eine begrenzte Gültigkeitsdauer hat, wird dieses von Zeit zu Zeit aktualisiert. Hierzu wird wie folgt vorgegangen: Wenn von der Schnittstelle 103 ein Root-Zertifikat 178 empfangen wird, so wird durch Ausführung des Programmmoduls 125 das in dem Speicherbereich 119 gespeicherte Root-Zertifikat durch das neu empfangene Root-Zertifikat 178 ersetzt, indem es überschrieben wird.

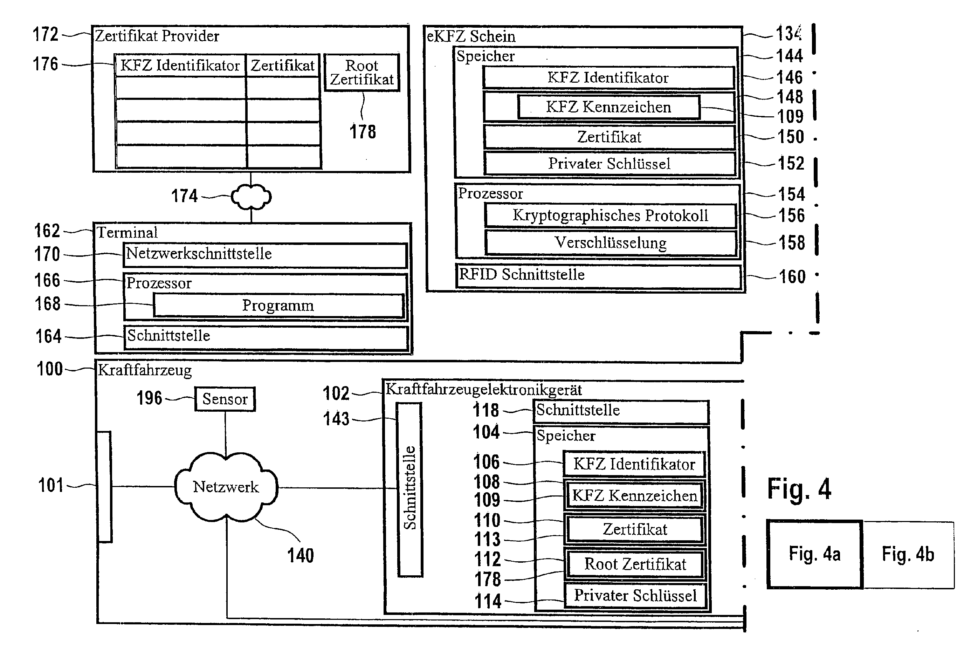

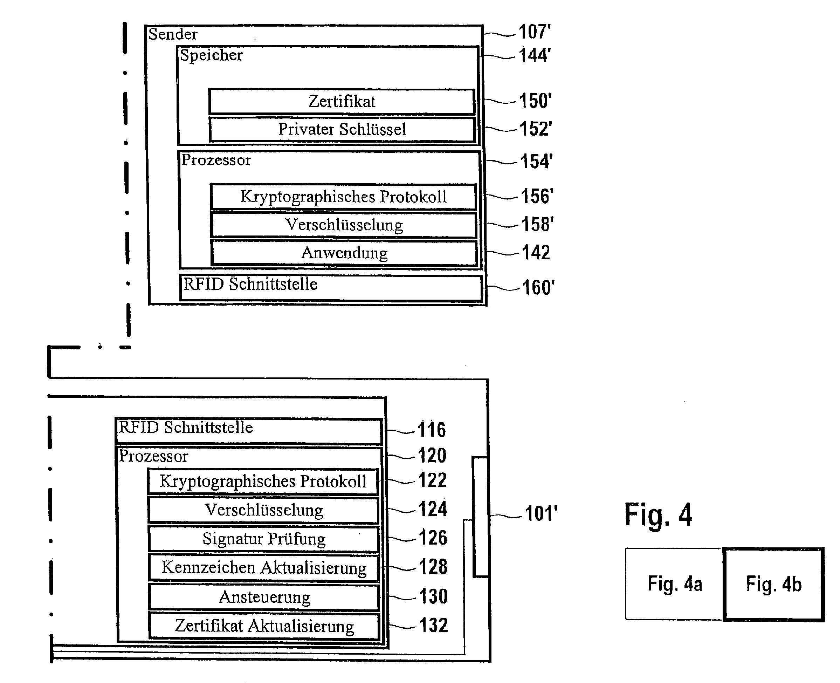

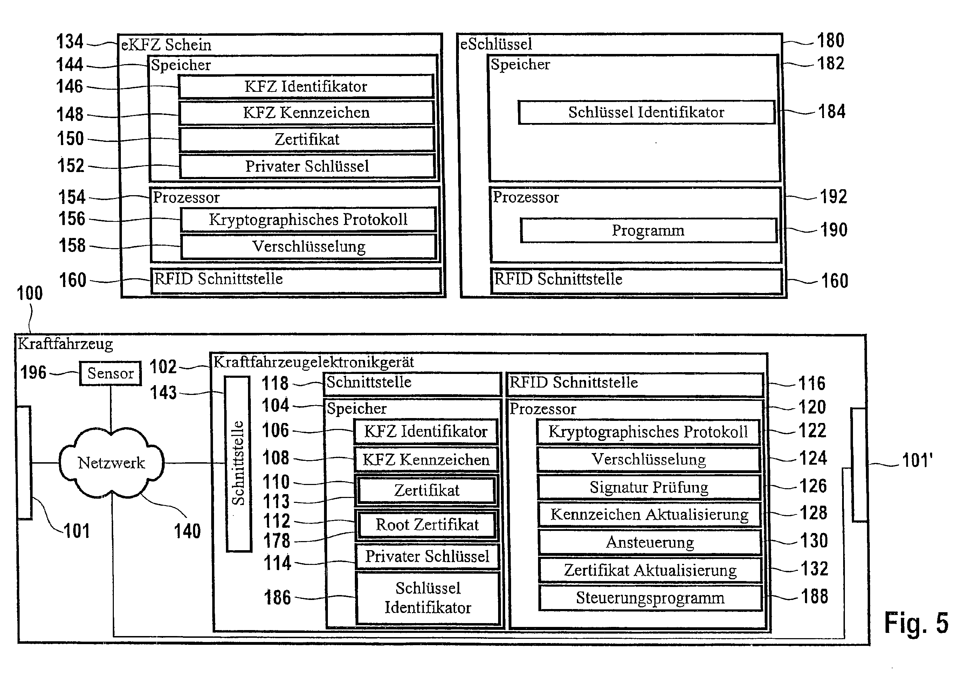

Die Nachricht 105 und das Root-Zertifikat 178 können von demselben Sender 107 oder von unterschiedlichen Sendern 107 empfangen werden. Beispielsweise ist der Sender 107 der Kraftfahrzeug-Meldebehörde zugeordnet; insbesondere kann der Sender 107 als ID-Token 134 (vgl. unten Figuren 4 und 5) ausgebildet sein.

Ein Sender 107 für die Sendung des Root-Zertifikats 178 kann zum Beispiel als Kraftfahrzeug-Elektronikgerät 102 (vgl. die Ausführungsform der Figuren 4 und 5) oder als Terminal 162 zum Beispiel einer Kraftfahrzeug-Werkstatt oder eines Kraftfahrzeug-Prüfinstituts, wie zum Beispiel des Technischen Überwachungsvereins (TÜV) ausgebildet sein, sodass das Root-Zertifikat 178 anlässlich einer Wartung oder einer Hauptuntersuchung an die Schnittstelle 103 gesendet wird.

Die Schnittstelle 103 ist ferner zum Empfang einer Nachricht 105' ausgebildet. Die Nachricht 105' kann von dem Sender 107 oder einem anderen Sender 107' empfangen werden. Bei dem Sender 107' kann es sich zum Beispiel um einen Sensor des Kraftfahrzeugs, ein Kraftfahrzeug-Elektronikgerät, wie zum Beispiel eine ECU des Kraftfahrzeugs, oder einen mobilen oder stationären Sender handeln, wobei der mobile oder stationäre Sender zum Beispiel von einer Behörde, der Polizei oder einer anderen hierzu autorisierten Institution betrieben wird.

Die Nachricht 105' beinhaltet Daten 109', die das erste Signal bilden. Ferner beinhaltet die Nachricht 105' ein Chiffrat 111' und ein Zertifikat 113'. Durch das Chiffrat 111' und das Zertifikat 113' werden eine digitale Signatur der Daten 109' gebildet. Beispielsweise wird das Chiffrat 111' durch Verschlüsselung der Daten 109' mit Hilfe eines privaten kryptografischen Schlüssels erzeugt, wobei dieser private kryptografische Schlüssel dem in dem Zertifikat 113' angegebenen öffentlichen Schlüssel zugeordnet sein muss.

Beispielsweise können die Daten 109' eine Information beinhalten, wie zum Beispiel einen Fahrzeugparameter. Beispielsweise dient ein Sensor zur Erfassung eines aktuellen Abgaswerts des Kraftfahrzeugs. Der Sensor liefert diese Information an den Sender 107', der diese Information in Form der Daten 109' als Teil der Nachricht 105' an die Kraftfahrzeug-Anzeigevorrichtung 101 sendet. Alternativ oder zusätzlich kann die Information andere Fahrzeugparameter beinhalten, wie zum Beispiel die Geschwindigkeit des Kraftfahrzeugs, den aktuell von dem Kraftfahrzeug erzeugten Lärmpegel oder andere Umwelt- und/oder sicherheitsrelevante Fahrzeugparameter.

Alternativ oder zusätzlich können die Daten 109' eine gebührenrelevante Information beinhalten, wie zum Beispiel einen Gebührenstatus. Bei dieser Ausführungsform ist der Sender 107' beispielsweise als Kraftfahrzeug-Elektronikgerät ausgebildet. Das Kraftfahrzeug-Elektronikgerät stellt fest, ob eine erforderliche Gebühr, wie zum Beispiel eine Mautgebühr, eine Steuer oder eine Abgasgebühr, für das Kraftfahrzeug entrichtet worden ist oder zu entrichten ist. Eine entsprechende Information, die den Gebührenstatus angibt, wird von dem Kraftfahrzeug-Elektronikgerät als Nachricht 105' an die Kraftfahrzeug-Anzeigevorrichtung 101 gesendet.

Nachdem die Nachricht 105' von der Kraftfahrzeug-Anzeigevorrichtung 101 empfangen worden ist, wird das Programmmodul 123 gestartet, um eine Signaturprüfung der durch das Chiffrat 111' und das Zertifikat 113' gebildeten Signatur durchzuführen. Wenn die Signatur gültig ist, wird die in den Daten 109' beinhaltete Information in einem Speicherbereich 131 des elektronischen Speichers 115 gespeichert. Daraufhin wird die Ausführung eines Programmmoduls 139 durch den Prozessor 121 gestartet.

Das Programmmodul 139 dient zur Generierung des zweiten Signals. Beispielsweise wird das zweite Signal in das Programmmodul 127 eingegeben, um das Display 136 zur optischen Ausgabe des zweiten Signals anzusteuern. Beispielsweise soll über das zweite Signal die in dem Speicherbereich 131 gespeicherte Information ausgegeben werden: Hierzu greift das Programmmodul 139 auf die in dem Speicherbereich 131 gespeicherte Information zu und generiert das zweite Signal, beispielsweise mit Hilfe eines Modulationsverfahrens, wobei dem zweiten Signal die Information aufmoduliert wird.

Das Programmmodul 139 kann auch so ausgebildet sein, dass die Information einer Datenverarbeitungsoperation unterzogen wird und das Ergebnis dieser Datenverarbeitungsoperation zur Modulation des zweiten Signals dient, um dieses Ergebnis der Datenverarbeitungsoperation optisch über das Display 136 auszugeben.

Bei den Daten 109' kann es sich auch um ein Kommando, wie zum Beispiel ein Abfragekommando, handeln. Beispielsweise dient das Abfragekommando zur Abfrage der in dem Speicherbereich 131 gespeicherten Information. In diesem Fall wird wiederum zunächst die Validität der Signaturdaten 109' geprüft. Wenn die Signatur valide ist, wird danach auf den Speicherbereich 131 zugegriffen, um von dort die Information auszulesen. Mit Hilfe dieser Information wird dann das zweite Signal durch Ausführung des Programmmoduls 139 generiert, und über das Display 136 optisch ausgegeben.

Beispielsweise empfängt die Kraftfahrzeug-Anzeigevorrichtung 101 zunächst eine erste Nachricht 105' von einem Sender 107' des Kraftfahrzeugs, d.h. beispielsweise von einem Sensor oder von einer ECU. Die erste Nachricht 105' beinhaltet einen Fahrzeugparameter. Dieser Fahrzeugparameter wird als Information in den Speicherbereich 131 geschrieben, wenn die Signatur der ersten Nachricht 105' gültig ist.

Zu einem nachfolgenden Zeitpunkt empfängt die Kraftfahrzeug-Anzeigevorrichtung 101 eine zweite Nachricht 105' von einem externen Sender, wobei in diesem Fall die Daten 109' ein Abfragekommando zur Abfrage der Information beinhalten. Wenn die Signatur der zweiten Nachricht 105' gültig ist, so wird daraufhin die Information aus dem Speicherbereich 131 ausgelesen, das zweite Signal generiert und über das Display 136 optisch ausgegeben.

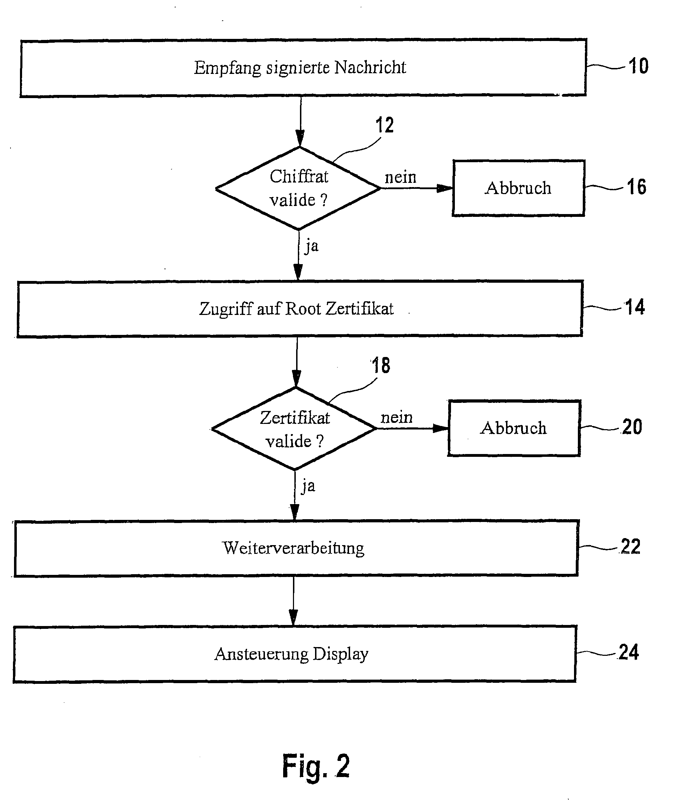

Die Figur 2 zeigt ein Flussdiagramm einer Ausführungsform eines erfindungsgemäßen Verfahrens. In dem Schritt 10 empfängt die Kraftfahrzeug-Anzeigevorrichtung eine signierte Nachricht mit Kennzeichendaten und einer Signatur der Kennzeichendaten, wobei die Signatur aus einem Chiffrat der Kennzeichendaten und einem dazugehörigen Zertifikat gebildet wird.

In dem Schritt 12 wird geprüft, ob das Chiffrat valide ist. Hierzu wird beispielsweise das Chiffrat mit Hilfe des öffentlichen Schlüssels, der in dem Zertifikat der Nachricht angegeben ist, entschlüsselt. Stimmt das Ergebnis der Entschlüsselung mit den Kennzeichendaten der Nachricht überein, so wird das Chiffrat als valide betrachtet und die Ablaufsteuerung geht zu dem Schritt 14 über; im gegenteiligen Fall erfolgt ein Abbruch in dem Schritt 16.

In dem Schritt 14 wird auf das in dem Speicher der Kraftfahrzeug-Anzeigevorrichtung gespeicherte Root-Zertifikat zugegriffen, um in dem Schritt 18 zu prüfen, ob das mit der Nachricht empfangene Zertifikat der Signatur valide ist. Hierzu wird mit Hilfe des Root-Zertifikats eine Zertifikatskettenprüfung durchgeführt. Wenn das Zertifikat nicht valide ist, so erfolgt in dem Schritt 20 ein Abbruch.

Wenn das Zertifikat valide ist, so werden in dem Schritt 22 die mit der Nachricht empfangenen Kennzeichendaten weiterverarbeitet. Dies kann so erfolgen, dass die Kennzeichendaten in den Speicher der Kraftfahrzeug-Anzeigevorrichtung gespeichert werden, um damit in dem Schritt 24 ein Display der Kraftfahrzeug-Anzeigevorrichtung anzusteuern, sodass die aktualisierten Kennzeichendaten von dem Display wiedergegeben werden.

Wenn in dem Schritt 10 dagegen eine signierte Nachricht von der Kraftfahrzeug-Anzeigevorrichtung empfangen wird, die anstelle der Kennzeichendaten eine Information, wie zum Beispiel einen Fahrzeugparameter oder einen Gebührenstatus, oder ein Kommando, wie zum Beispiel ein Abfragekommando, beinhaltet, werden die Schritte 12 bis 20 bezüglich dieser Nachricht ebenso ausgeführt. In dem Schritt 22 erfolgt die Weiterverarbeitung der Daten, indem beispielsweise die in den Daten beinhaltete Information in einem Speicher der Kraftfahrzeug-Anzeigevorrichtung gespeichert wird oder indem die Information aus dem Speicher abgefragt wird, um sie danach in dem Schritt 24 optisch auszugeben.

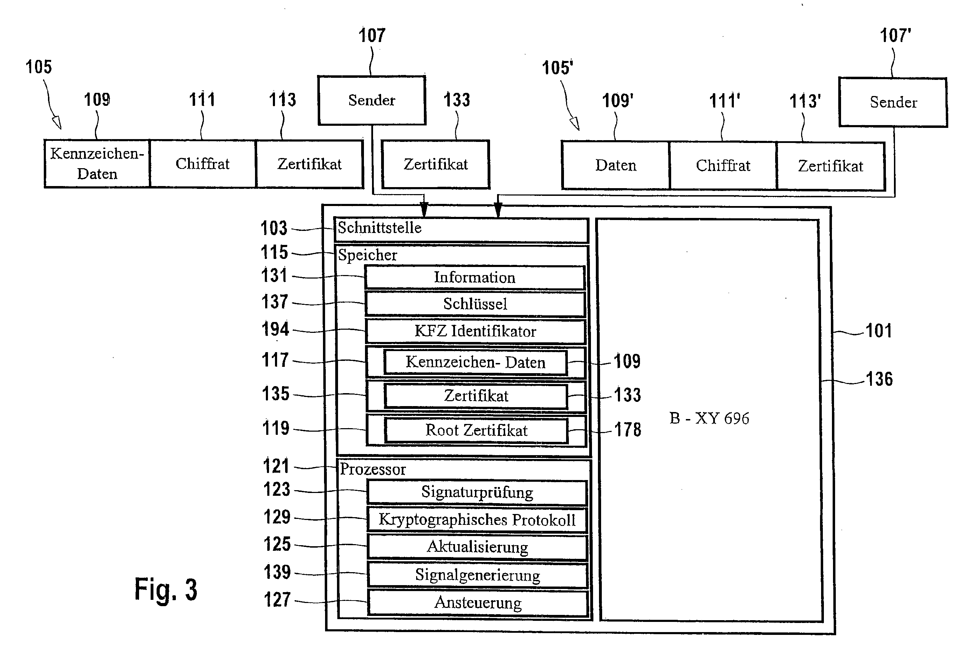

Die Figur 3 zeigt ein Blockdiagramm einer Ausführungsform einer erfindungsgemäßen Kraftfahrzeug-Anzeigevorrichtung 101, der ein Zertifikat 133 zugeordnet ist. Der elektronische Speicher 115 der Kraftfahrzeug-Anzeigevorrichtung 101 hat einen Speicherbereich 135 zur Speicherung des Zertifikats 133. Wie das Root-Zertifikat 178 (vgl. Figur 1) so hat auch das Zertifikat 133 eine begrenzte Gültigkeitsdauer. Vorzugsweise sind die Gültigkeitsdauern des Root-Zertifikats 178 und des Zertifikats 133 so gewählt, dass sie zum gleichen Zeitpunkt ablaufen. Hierdurch kann die Häufigkeit der Aktualisierungen minimiert werden..

In dem elektronischen Speicher 115 der Kraftfahrzeug-Anzeigevorrichtung 101 ist in einem geschützten Speicherbereich 137 ein privater Schlüssel der Kraftfahrzeug-Anzeigevorrichtung 101 gespeichert. Das Zertifikat 133 ist diesem privaten Schlüssel zugeordnet, da das Zertifikat 133 einen öffentlichen Schlüssel beinhaltet, wobei durch den privaten und den öffentlichen Schlüssel ein asymmetrisches Schlüsselpaar gebildet wird.

Der Prozessor 121 dient ergänzend zu der Ausführungsform der Figur 1 zur Ausführung eines Programmmoduls 129, durch welches die die Kraftfahrzeug-Anzeigevorrichtung 101 betreffende Schritte eines kryptografischen Protokolls implementiert werden. Durch Ausführung des kryptografischen Protokolls kann eine einseitige oder eine gegenseitige Authentifizierung der Kraftfahrzeug-Anzeigevorrichtung 101 und des Senders 107 bzw. 107' durchgeführt werden, beispielsweise nach einem sogenannten Challenge-Response-Verfahren.

Das Zertifikat 133 kann initial herstellerseitig in dem Speicherbereich 135 gespeichert werden, sodass das Zertifikat 133 bei Auslieferung des neuen Kraftfahrzeugs an den Kunden bereits in dem Speicher 115 gespeichert ist.

Wenn bei der hier betrachteten Ausführungsform eine Initialisierung oder Aktualisierung der Kennzeichendaten erfolgen soll, muss zunächst eine einseitige oder eine gegenseitige Authentifizierung zwischen der Kraftfahrzeug-Anzeigevorrichtung 101 und dem Sender 107 durchgeführt werden. Hierzu wird beispielsweise wie folgt vorgegangen:

Das Programmmodul 129 greift auf das in den Speicherbereich 135 gespeicherte Zertifikat 133 zu, um es von der Schnittstelle 103 an den Sender 107 zu senden. Von dem Sender 107 wird dann eine sogenannte Challenge generiert, d.h. beispielsweise eine Zufallszahl. Diese Zufallszahl wird mit dem in dem Zertifikat 133 beinhalteten öffentlichen Schlüssel verschlüsselt.

Das resultierende Chiffrat wird von dem Sender 107 an die Schnittstelle 103 gesendet. Das Programmmodul 129 entschlüsselt das Chiffrat mit Hilfe des in dem Speicherbereich 137 gespeicherten privaten Schlüssels und erhält so die Zufallszahl. Diese Zufallszahl sendet das Programmmodul 129 über die Schnittstelle 103 an den Sender 107 zurück. Senderseitig wird dann geprüft, ob die von der Kraftfahrzeug-Anzeigevorrichtung empfangene Zufallszahl mit der ursprünglich generierten Zufallszahl, d.h. der Challenge, übereinstimmt. Ist dies der Fall, so gilt die Kraftfahrzeug-Anzeigevorrichtung 101 als gegenüber dem Sender 107 authentifiziert. In analoger Art und Weise kann eine Authentifizierung des Senders 107 gegenüber der Kraftfahrzeug-Anzeigevorrichtung 101 erfolgen.

Erst nachdem die einseitige oder gegenseitige Authentifizierung erfolgt ist, ist die Schnittstelle 103 für den Empfang der Nachricht 105 empfangsbereit.

Zur Aktualisierung des Zertifikats 133 wird wie folgt vorgegangen:
Der Sender 107 sendet das aktualisierte Zertifikat 133 an die Schnittstelle 103. Durch die Ausführung des Programmmoduls 125 wird dann das aktualisierte Zertifikat 133 in den Speicherbereich 135 geschrieben, wobei das vorherige Zertifikat überschrieben wird. Der öffentliche Schlüssel des Zertifikats 133 bleibt dabei unverändert, da auch der in dem Speicherbereich 137 gespeicherte private Schlüssel unverändert bleiben soll.

Zusätzlich kann die Nachricht 105 eine Kennung beinhalten, die ebenfalls signiert sein kann. Bei dieser Kennung kann es sich um den in dem Speicherbereich 194 eines Kraftfahrzeug-Elektronikgeräts 102 (vgl. die Ausführungsform der Figur 4 und 5) gespeicherten Kraftfahrzeug-Identifikator handeln. Zusätzlich zu der Validität der Signatur wird dann seitens der Kraftfahrzeug-Anzeigevorrichtung 101 geprüft, ob die mit der Nachricht 105 empfangene Kennung mit dem in den Speicherbereich 194 der Kraftfahrzeug-Anzeigevorrichtung 101 gespeicherten Kraftfahrzeug-Identifikator übereinstimmt. Dies kann eine weitere notwendige Voraussetzung dafür sein, dass die Kennzeichendaten in den Speicherbereich 117 geschrieben werden.

Wenn bei der hier betrachteten Ausführungsform aufgrund des Empfangs der Nachricht 105' ein optisches Signal von dem Display 136 ausgegeben werden soll, muss zunächst eine einseitige oder eine gegenseitige Authentifizierung zwischen der Anzeigevorrichtung 101 und dem Sender 107' durchgeführt werden. Hierzu wird beispielsweise wie folgt vorgegangen:
Das Programmmodul 129 greift auf das in den Speicherbereich 135 gespeicherte Zertifikat 133 zu, um es von der Schnittstelle 103 an den Sender 107' zu senden. Von dem Sender 107' wird dann eine sogenannte Challenge generiert, d.h. beispielsweise eine Zufallszahl. Diese Zufallszahl wird mit dem in dem Zertifikat 133' beinhalteten öffentlichen Schlüssel verschlüsselt.

Das resultierende Chiffrat wird von dem Sender 107' an die Schnittstelle 103 gesendet. Das Programmmodul 129 entschlüsselt das Chiffrat mit Hilfe des in dem Speicherbereich 137 gespeicherten privaten Schlüssels und erhält so die Zufallszahl. Diese Zufallszahl sendet das Programmmodul 129 über die Schnittstelle 103 an den Sender 107' zurück. Senderseitig wird dann geprüft, ob die von der Kraftfahrzeug-Anzeigevorrichtung empfangene Zufallszahl mit der ursprünglich generierten Zufallszahl, d.h. der Challenge, übereinstimmt. Ist dies der Fall, so gilt die Kraftfahrzeug-Anzeigevorrichtung 101 als gegenüber dem Sender 107' authentifiziert. In analoger Art und Weise kann eine Authentifizierung des Senders 107' gegenüber der Kraftfahrzeug-Anzeigevorrichtung 101 erfolgen.

Erst nachdem die einseitige oder gegenseitige Authentifizierung erfolgt ist, ist die Schnittstelle 103 für den Empfang der Nachricht 105' empfangsbereit.

Die Figur 4 zeigt schematisch ein Kraftfahrzeug 100, wie zum Beispiel einen Personenkraftwagen. Das Kraftfahrzeug 100 hat zumindest ein Kraftfahrzeug-Elektronikgerät 102, welches beispielsweise als sogenannte Electronic Control Unit (ECU) ausgebildet sein kann.

Das Kraftfahrzeug-Elektronikgerät 102 hat einen elektronischen Speicher 104 mit zumindest den Speicherbereichen 106, 108, 110, 112 und 114. Der Speicherbereich 106 dient zur Speicherung eines Kraftfahrzeug-Identifikators, d.h. eines sogenannten Unique Identifiers, wie zum Beispiel der Fahrgestellnummer des Kraftfahrzeugs 100. Vorzugsweise ist der Speicherbereich 106 so ausgebildet, dass der dort gespeicherte Kraftfahrzeug-Identifikator nicht geändert werden kann, sodass also das Kraftfahrzeug-Elektronikgerät 102 dem Kraftfahrzeug 100 fest zugeordnet ist.

Der Speicherbereich 108 dient zur Speicherung von Daten, die das amtliche Kraftfahrzeug-Kennzeichen des Kraftfahrzeugs 100 beinhalten, d.h. der Daten 109 (vgl. Fig. 1 und 3). Diese Daten können über eine Schnittstelle 116 des Kraftfahrzeug-Elektronikgeräts 102 aktualisiert werden. Die Schnittstelle 116 ist bei der hier betrachteten Ausführungsform kontaktlos als Funk-Schnittstelle ausgebildet, die nach einem RFID-Verfahren arbeitet.

Der Speicherbereich 110 dient zur Speicherung eines Zertifikats 113 des Kraftfahrzeugs 100, wobei es sich bei dem Zertifikat beispielsweise um ein standardisiertes Zertifikat einer PKI handeln kann. Der Speicherbereich 112 dient zur Speicherung des Root Zertifikats 178 der PKI.

In dem Speicherbereich 114 des Speichers 104 ist der zu dem Zertifikat 113 gehörende private Schlüssel des Kraftfahrzeugs 100 gespeichert. Auf diesen Speicherbereich 114 ist ein externer Zugriff über die Schnittstelle 116 oder über eine weitere Schnittstelle 118 des Kraftfahrzeug-Elektronikgeräts 102 prinzipiell nicht möglich.

Die Schnittstelle 118 ist zum Beispiel kontaktbehaftet zum Anschluss eines Kabels ausgebildet. Über die Schnittstelle 118 kann ein externer Zugriff auf die Speicherbereiche 110 und 112 erfolgen, um das Zertifikat 1113, das Zertifikat 133 und/oder das Root-Zertifikat 178 zu aktualisieren.

Das Kraftfahrzeug-Elektronikgerät 102 hat ferner zumindest einen Prozessor 120 zur Ausführung von Programmmodulen 122, 124, 126, 128, 130 und 132.

Das Programmmodul 122 dient zur Ausführung der das Kraftfahrzeug-Elektronikgerät 102 betreffenden Schritte eines kryptografischen Protokolls zur Authentifizierung des Kraftfahrzeug-Elektronikgeräts 102 gegenüber einem ID-Token 134. Vorzugsweise ist das Programmmodul 122 so ausgebildet, dass auch eine Authentifizierung des ID-Tokens 134 gegenüber dem Kraftfahrzeug-Elektronikgerät 102 erfolgt.

Das Programmmodul 124 dient zur Verschlüsselung von Daten, die zwischen dem Kraftfahrzeug-Elektronikgerät 102 und dem ID-Token 134 ausgetauscht werden. Hierbei kann eine Verschlüsselung mit einem symmetrischen oder einem asymmetrischen Schlüssel erfolgen.

Das Programmmodul 126 dient zur Durchführung einer Signaturprüfung einer von dem ID-Token 134 empfangenen elektronischen Signatur. Hierzu greift das Programmmodul 126 auf den Speicherbereich 112 zu, um dort das Root-Zertifikat 178 abzurufen.

Das Programmmodul 128 wird zur Aktualisierung der in dem Speicherbereich 108 gespeicherten Daten, welche das amtliche Kraftfahrzeug-Kennzeichen beinhalten, gestartet. Das Programmmodul 130 dient zur Ansteuerung der Kraftfahrzeug-Anzeigevorrichtungen 101 und 101' des Kraftfahrzeugs 100. Die Kraftfahrzeug-Anzeigevorrichtungen 101 und 101' können dort an dem Kraftfahrzeug 100 angeordnet sein, wo üblicherweise die Nummernschilder angeordnet sind. Die Kraftfahrzeug-Anzeigevorrichtungen 101 und 101' sind mit dem Kraftfahrzeug-Elektronikgerät 102 über gesicherte Datenübertragungskanäle verbunden. Beispielsweise können die Datenübertragungskanäle über ein Netzwerk 140, beispielsweise über ein Bussystem des Kraftfahrzeugs 100 realisiert werden. Hierzu hat das Kraftfahrzeugelektronikgerät 102 eine Schnittstelle 143, über die die Datenübertragungskanäle mit den Kraftfahrzeug-Anzeigevorrichtungen 101 bzw. 101' hergestellt werden können.

Das Programmmodul 132 wird gestartet, um das in dem Speicherbereich 110 gespeicherte Zertifikat 113 und/oder das in dem Speicherbereich 112 gespeicherte Root-Zertifikat und/oder das Zertifikat 133 über die Schnittstelle 118 zu aktualisieren.

Das Kraftfahrzeug-Elektronikgerät 102 kann als System bestehend aus mehreren räumlich voneinander getrennten elektronischen Komponenten realisiert sein, welche zum Beispiel über ein Bussystem des Kraftfahrzeugs 100 miteinander verbunden sind. Dementsprechend kann auch der Speicher 104 über verschiedene solcher Komponenten, die insgesamt das Kraftfahrzeug-Elektronikgerät 102 bilden, verteilt realisiert sein. Entsprechendes gilt für den Prozessor 120.

Der ID-Token 134 hat einen elektronischen Speicher 144 mit geschützten Speicherbereichen 146, 148, 150 und 152. Der Speicherbereich 146 dient zur Speicherung des Kraftfahrzeug-Identifikators, der auch in dem Speicherbereich 106 des Speichers 104 des Kraftfahrzeug-Elektronikgeräts 102 gespeichert ist. Hierdurch ist der ID-Token 134 dem Kraftfahrzeug 100 eindeutig zugeordnet. In dem Speicherbereich 146 kann zusätzlich eine Signatur des Kraftfahrzeug-Identifikators gespeichert sein.

In dem Speicherbereich 148 sind die Daten 109 gespeichert, die das aktuelle amtliche Kraftfahrzeug-Kennzeichen des Kraftfahrzeugs 100 beinhalten. Zusätzlich kann in dem Speicherbereich 148 eine digitale Signatur dieser Daten 109 gespeichert sein. Diese Daten 109 können von einem Servercomputer der Kraftfahrzeug-Meldestelle in den Speicherbereich 148 geschrieben worden sein.

Der Speicherbereich 150 dient zur Speicherung eines Zertifikats des ID-Tokens 134. Der Speicherbereich 152 dient zur Speicherung eines privaten Schlüssels, dem das in dem Speicherbereich 150 gespeicherte Zertifikat zugeordnet ist.

Der ID-Token 134 hat ferner einen Prozessor 154 zur Ausführung von Programmmodulen 156 und 158, die den Programmmodulen 122 und 124 entsprechen. Das Programmmodul 156 dient zur Ausführung derjenigen Schritte des kryptografischen Protokolls, welche den ID-Token 134 betreffen. Das Programmmodul 158 dient zum Aufbau der verschlüsselten Verbindung mit dem Kraftfahrzeug-Elektronikgerät 102, insbesondere einer Verbindung mit Ende-zu-Ende-Verschlüsselung mit Hilfe eines symmetrischen oder asymmetrischen Schlüssels.

Der ID-Token 134 hat ferner eine Schnittstelle 160, die der Schnittstelle 116 des Kraftfahrzeug-Elektronikgeräts 102 entspricht, und beispielsweise als Funkschnittstelle ausgebildet ist, die nach einem RFID-Verfahren arbeitet.

Bei dem ID-Token 134 kann es sich um ein Dokument handeln, wie zum Beispiel einen elektronischen Kraftfahrzeugbrief oder einen elektronischen Kraftfahrzeugschein, wie in der Figur 1 gezeigt. Das Dokument kann zum Beispiel kartenförmig ausgebildet sein.

Das Kraftfahrzeug-Elektronikgerät 102 ist über seine Schnittstelle 118 mit einem Terminal 162 verbindbar. Das Terminal 162 hat eine Schnittstelle 164, die der Schnittstelle 118 des Kraftfahrzeug-Elektronikgeräts 102 entspricht. Die Schnittstellen 164 und 118 können zum Beispiel mit einem Kabel verbunden werden, wozu typischerweise die Motorhaube des Kraftfahrzeugs 100 geöffnet werden muss.

Der Terminal 162 hat zumindest einen Prozessor 166 zur Ausführung eines Programms 168 sowie eine Netzwerk-Schnittstelle 170 zur Kommunikation mit einem Servercomputer 172 über ein Netzwerk 174.

Durch den Servercomputer 172 wird ein Zertifikat-Provider zur Verfügung gestellt, beispielsweise in Form einer Datenbank 176, in der aktuelle Zertifikate für verschiedene Kraftfahrzeuge und deren Kraftfahrzeug-Anzeigevorrichtungen gespeichert sind. Als Zugriffsschlüssel für die in der Datenbank 176 gespeicherten Zertifikate dient dabei der jeweilige Kraftfahrzeug-Identifikator. Zusätzlich kann der Servercomputer 172 auch ein aktualisiertes Root-Zertifikat 178 liefern.

Für eine Aktualisierung des Kraftfahrzeug-Kennzeichens wird so vorgegangen:
1. Zunächst ruft der Benutzer, d.h. zum Beispiel der Halter des Kraftfahrzeugs 100 einen Online-Dienst eines Servercomputers, zum Beispiel einer Kraftfahrzeug-Meldebehörde, auf. Dies kann über einen Personalcomputer des Halters über das Internet erfolgen. Der Personalcomputer hat ein Lesegerät zur Kommunikation mit dem ID-Token 134. Über den Personalcomputer und dessen Lesegerät wird eine gesicherte Verbindung mit dem Server der Kraftfahrzeug-Meldestelle aufgebaut, über die die Daten 109 mit dem aktualisierten Kraftfahrzeug-Kennzeichen und gegebenenfalls deren Signatur in den Speicherbereich 146 des ID-Tokens 134 geschrieben werden.
2. Wenn sich der Benutzer mit dem ID-Token 134 im Empfangsbereich der Schnittstelle 116 befindet, wird das Programmmodul 128 gestartet, um das Kraftfahrzeug-Kennzeichen zu aktualisieren. Dies kann manuell erfolgen, indem der Benutzer ein Bedienelement des Kraftfahrzeugs 100 betätigt, das zum Beispiel an der Instrumententafel des Kraftfahrzeugs 100 angeordnet sein kann. Das Programmmodul 128 kann aber auch ständig ausgeführt werden. Durch Ausführung des Programmmoduls 128 werden dann zyklisch innerhalb gewisser zeitlicher Abstände Signale von der Schnittstelle 116 ausgesendet, um zu prüfen, ob sich im Empfangsbereich der Schnittstelle 116 das ID-Token 134 befindet.
   Die Aktualisierung des Kraftfahrzeug-Kennzeichens erfolgt dann so, dass eine Verbindung zwischen den Schnittstellen 116 und 160 hergestellt wird. Beispielsweise greift das Programmmodul 128 auf das in dem Speicherbereich 110 gespeicherte Zertifikat 113 zu, um es von der Schnittstelle 116 an den ID-Token 134 zu senden. Durch das Programmmodul 156 des ID-Tokens 134 wird dann eine sogenannte Challenge generiert, d.h. beispielsweise eine Zufallszahl. Diese Zufallszahl wird mit dem in dem Zertifikat 113 beinhalteten öffentlichen Schlüssel des Kraftfahrzeugs 100 verschlüsselt.
   Das resultierende Chiffrat wird von dem ID-Token 134 über die Verbindung an die Schnittstelle 116 des Kraftfahrzeug-Elektronikgeräts 102 gesendet. Das Programmmodul 122 entschlüsselt das Chiffrat mit Hilfe des in dem Speicherbereich 114 gespeicherten privaten Schlüssels des Kraftfahrzeugs 100 und erhält so die Zufallszahl. Diese Zufallszahl sendet das Programmmodul 122 über die Schnittstelle 116 an den ID-Token 134 zurück.
   Durch Ausführung des Programmmoduls 156 wird dort geprüft, ob die von dem Kraftfahrzeug-Elektronikgerät 102 empfangene Zufallszahl mit der ursprünglich generierten Zufallszahl, d.h. der Challenge, übereinstimmt. Ist dies der Fall, so gilt das Kraftfahrzeug-Elektronikgerät 102 als gegenüber dem ID-Token 134 authentifiziert. Die Zufallszahl kann als symmetrischer Schlüssel für die Ende-zu-Ende-Verschlüsselung verwendet werden, die von den Programmmodulen 124 bzw. 158 durchgeführt wird.
   Optional kann in analoger Art und Weise eine Authentifizierung des ID-Tokens 134 gegenüber dem Kraftfahrzeug-Elektronikgerät 102 erfolgen.
   In die einseitige oder gegenseitige Authentisierung kann auch der Kraftfahrzeug-Identifikator, der in den Speicherbereichen 106 bzw. 146 gespeichert ist, mit eingehen. Beispielsweise sendet der ID-Token 134 den von dem ID-Token 134 signierten Kraftfahrzeug-Identifikator an das Kraftfahrzeugelektronik-Gerät 102. Das Kraftfahrzeugelektronik-Gerät 102 prüft dann die Signatur und vergleicht den von dem ID-Token 134 empfangenen Kraftfahrzeug-Identifikator mit dem in dem Speicherbereich 106 gespeicherten Kraftfahrzeug-Identifikator. Wenn die Signatur valide ist und die Kraftfahrzeug-Identifikatoren übereinstimmen, gilt der ID-Token 134 als authentisch.
3. Nachdem die einseitige oder gegenseitige Authentifizierung des Kraftfahrzeug-Elektronikgeräts 102 und des ID-Tokens 134 erfolgt ist, erhält das Kraftfahrzeug-Elektronikgerät 102 eine Leseberechtigung zum Zugriff auf den Speicherbereich 148 des ID-Tokens 134. Das Programmmodul 128 sendet dann ein entsprechendes Lesekommando von der Schnittstelle 116 an den ID-Token 134. Der ID-Token 134 liest daraufhin die Kennzeichen-Daten 109, ggf. einschließlich der Signatur, aus dem Speicherbereich 148 und sendet diese über die Verbindung mit Ende-zu-Ende-Verschlüsselung an die Schnittstelle 116. Das Programmmodul 128 startet dann das Programmmodul 126, um die Signatur der Daten 109 mit Hilfe des Root-Zertifikats 112 zu prüfen. Wenn die Signatur valide ist, werden die Daten in den Speicherbereich 108 gespeichert, wobei die dort zuvor gespeicherten Daten überschrieben werden können.
   Durch Ausführung des Programmmoduls 130 wird dann die Nachricht 105 (vgl. Figur 1 und Figur 3) generiert. Dies kann so erfolgen, dass die Daten 109 mit dem privaten Schlüssel, der in dem Speicherbereich 114 gespeichert ist, verschlüsselt werden, um so das Chiffrat 111 zu erzeugen. Diese Nachricht 105 wird dann über die Datenübertragungskanäle an die Kraftfahrzeug-Anzeigevorrichtungen 101 bzw. 101' gesendet, wo die Kennzeichendaten, d.h. die Daten 109, dementsprechend aktualisiert werden, sodass die aktualisierten Kennzeichendaten auf den Displays der Kraftfahrzeug-Anzeigevorrichtungen 101 und 101' wiedergegeben werden.

Zur Aktualisierung der in den Speicherbereichen 110 und 112 gespeicherten Zertifikate 113 bzw. 178 wird wie folgt vorgegangen:
Zwischen den Schnittstellen 118 und 164 wird zum Beispiel über ein Kabel eine Verbindung hergestellt. Durch Ausführung des Programms 168 wird der Kraftfahrzeug-Identifikator aus dem Speicherbereich 106 des Kraftfahrzeug-Elektronikgeräts 102 ausgelesen. Das Programm 168 generiert dann eine Anforderung für den Servercomputer 172, welche diesen Kraftfahrzeug-Identifikator beinhaltet.

Diese Anforderung sendet das Terminal 162 von seiner Netzwerk-Schnittstelle 170 über das Netzwerk 174 an den Servercomputer 172. Aufgrund dieser Anforderung greift der Servercomputer auf die Datenbank 176 zu, um mit Hilfe des Kraftfahrzeug-Identifikators das dem Kraftfahrzeug-Identifikator zugeordnete aktuelle Zertifikat 113 auszulesen. Das Zertifikat 113 und das aktuelle Root-Zertifikat 178 werden von dem Servercomputer 172 über das Netzwerk 174 an das Terminal 162 gesendet, und von dort durch Ausführung des Programms 168 über die Verbindung zwischen der Schnittstelle 164 und der Schnittstelle 118 zu dem Kraftfahrzeug-Elektronikgerät 102 übertragen, wo das aktuelle Zertifikat 113 in den Speicherbereich 110 und das aktuelle Root-Zertifikat 178 in dem Speicherbereich 112 gespeichert werden, indem die dort jeweils zuvor gespeicherten Zertifikate überschrieben werden.

Das Terminal kann beispielsweise zu einer Werkstatt gehören, die auf diese Art und Weise die Zertifikate anlässlich einer turnusmäßigen Wartung des Kraftfahrzeugs 100 aktualisiert. Der Terminal kann auch zu einer Prüfstelle, wie zum Beispiel dem Technischen Überprüfungsverein (TÜV) gehören, welcher die Aktualisierung der Zertifikate anlässlich einer sogenannten Hauptuntersuchung vornimmt.

In einer alternativen Ausführungsform ist die Schnittstelle 118 so ausgebildet, dass sie unmittelbar mit dem Servercomputer 172 kommunizieren kann, wie zum Beispiel über eine Mobilfunkverbindung.

In der Datenbank 176 können neben den aktuellen Zertifikaten 113 auch die aktuellen Zertifikate 133 der Kraftfahrzeug-Anzeigevorrichtungen der Kraftfahrzeuge gespeichert sein. Dann werden neben dem aktuellen Zertifikat 113 und dem aktuellen Root-Zertifikat 178 auch die aktuellen Zertifikate 133 und 133' der Kraftfahrzeug-Anzeigevorrichtungen 101 bzw. 101' des Kraftfahrzeugs 100 mit der Schnittstelle 118 empfangen. Das Kraftfahrzeug-Elektronikgerät 102 leitet dann das Root-Zertifikat 178 über die Datenübertragungskanäle an die Kraftfahrzeug-Anzeigevorrichtungen 101 bzw. 101' weiter, um die dort gespeicherten Root-Zertifikate zu aktualisieren (vgl. Ausführungsform der Figur 1).

Ferner leitet das Kraftfahrzeug-Elektronikgerät 102 auch die aktualisierten Zertifikate 133 und 133' über die Datenübertragungskanäle an die Kraftfahrzeug-Anzeigevorrichtungen 101 bzw. 101' weiter, sodass die dort gespeicherten Zertifikate jeweils aktualisiert werden (vgl. Ausführungsform der Figur 3).

Die Schnittstelle 116 des Kraftfahrzeug-Elektronikgeräts 102 kann so ausgebildet sein, dass sie die Nachricht 105' von dem externen Sender 107' empfangen kann (vgl. die Ausführungsformen der Figuren 1 und 3). In der hier betrachteten Ausführungsform hat der Sender 107' einen elektronischen Speicher 144' mit geschützten Speicherbereichen 150' und 152'. Der Speicherbereich 150' dient zur Speicherung eines Zertifikats des Senders 107'. Der Speicherbereich 152' dient zur Speicherung eines privaten Schlüssels, dem das in dem Speicherbereich 150' gespeicherte Zertifikat zugeordnet ist.

Der Sender 107' hat ferner einen Prozessor 154' zur Ausführung von Programmmodulen 156' und 158', die den Programmmodulen 122 und 124 entsprechen. Das Programmmodul 156' dient zur Ausführung derjenigen Schritte des kryptografischen Protokolls, welche den Sender 107' betreffen. Das Programmmodul 158' dient zum Aufbau einer verschlüsselten Verbindung mit dem Kraftfahrzeug-Elektronikgerät 102, insbesondere einer Verbindung mit Ende-zu-Ende-Verschlüsselung mit Hilfe eines symmetrischen oder asymmetrischen Schlüssels.

Der Prozessor 154 dient ferner zur Ausführung eines Anwendungsprogramms 142.

Der Sender 107' hat ferner eine Schnittstelle 160', die der Schnittstelle 116 des Kraftfahrzeug-Elektronikgeräts 102 entspricht, und beispielsweise als Funk-Schnittstelle ausgebildet ist, die nach einem RFID-Verfahren arbeitet.

Bei dem Sender 107' kann es sich um einen mobilen oder stationären externen Sender handeln. Beispielsweise kann der Sender 107' am Rand oder über einer Fahrbahn angeordnet sein, sodass die verschlüsselte Verbindung mit einem vorbeifahrenden Kraftfahrzeug aufgebaut werden kann. Der Sender 107' kann auch zum Beispiel in einem Polizeifahrzeug eingebaut sein, um von dem Polizeifahrzeug aus eine Kontrolle eines vorbeifahrenden Kraftfahrzeugs vorzunehmen, indem die verschlüsselte Verbindung aufgebaut wird.

Wenn sich das Kraftfahrzeug 100 in der Nähe des Senders 107' befindet, so wird eine Verbindung zwischen den Schnittstellen 116 und 160' hergestellt. Beispielsweise greift das Programmmodul 128 auf das in dem Speicherbereich 110 gespeicherte Zertifikat 113 zu, um es von der Schnittstelle 116 an den Sender 107' zu senden, nachdem eine entsprechende Aufforderung von dem Sender 107' empfangen worden ist. Durch das Programmmodul 156' des Senders 107' wird dann eine sogenannte Challenge generiert, d.h. beispielsweise eine Zufallszahl. Diese Zufallszahl wird mit dem in dem Zertifikat 113 beinhalteten öffentlichen Schlüssel des Kraftfahrzeugs 100 verschlüsselt.

Das resultierende Chiffrat wird von dem Sender 107' über die Verbindung an die Schnittstelle 116 des Kraftfahrzeug-Elektronikgeräts 102 gesendet. Das Programmmodul 122 entschlüsselt das Chiffrat mit Hilfe des in dem Speicherbereich 114 gespeicherten privaten Schlüssels des Kraftfahrzeugs 100 und erhält so die Zufallszahl. Diese Zufallszahl sendet das Programmmodul 122 über die Schnittstelle 116 an den Sender 107' zurück.

Durch Ausführung des Programmmoduls 156' wird dort geprüft, ob die von dem Kraftfahrzeug-Elektronikgerät 102 empfangene Zufallszahl mit der ursprünglich generierten Zufallszahl, d.h. der Challenge, übereinstimmt. Ist dies der Fall, so gilt das Kraftfahrzeug-Elektronikgerät 102 als gegenüber dem Sender 107' authentifiziert. Die Zufallszahl kann als symmetrischer Schlüssel für die Ende-zu-Ende-Verschlüsselung verwendet werden, die von den Programmmodulen 124 bzw. 158' durchgeführt wird.

Optional kann in analoger Art und Weise eine Authentifizierung des Senders 107 gegenüber dem Kraftfahrzeug-Elektronikgerät 102 erfolgen.

In die einseitige oder gegenseitige Authentisierung kann auch der Kraftfahrzeug-Identifikator, der in dem Speicherbereich 106 gespeichert ist, mit eingehen. Beispielsweise hat der Sender 107' Zugriff auf eine Kopie des Kraftfahrzeug-Identifikators. Der Sender 107' signiert den Kraftfahrzeug-Identifikator und sendet den signierten Kraftfahrzeug-Identifikator an das Kraftfahrzeug-Elektronikgerät 102. Das Kraftfahrzeug-Elektronikgerät 102 prüft dann die Signatur und vergleicht den von dem Sender 107 empfangenen Kraftfahrzeug-Identifikator mit dem in dem Speicherbereich 106 gespeicherten Kraftfahrzeug-Identifikator. Wenn die Signatur valide ist und die Kraftfahrzeug-Identifikatoren übereinstimmen, gilt damit eine Authentifizierungsbedingung als erfüllt.

Nachdem die einseitige oder gegenseitige Authentifizierung des Kraftfahrzeug-Elektronikgeräts 102 und des Senders 107' erfolgt ist, sendet der Sender 107' die Nachricht 105' an die Schnittstelle 116 über die geschützte Verbindung mit Ende-zu-Ende-Verschlüsselung. Das Kraftfahrzeug-Elektronikgerät 102 leitet die Nachricht 105' über seine Schnittstelle 143 und das Netzwerk 140 an die Kraftfahrzeug-Anzeigevorrichtungen 101 und 101' weiter, wo die Nachricht 105' beispielsweise gemäß der Ausführungsformen der Figuren 1 oder 2 weiterverarbeitet wird.

Alternativ kann das Kraftfahrzeug-Elektronikgerät 102 auch so ausgebildet sein, dass nach Empfang der Nachricht 105' die Signatur durch Ausführung des Programmmoduls 126 geprüft wird. Wenn die Signatur gültig ist, so werden die Daten 109' der Nachricht 105' über die Schnittstelle 143 und das Netzwerk 140 an die Kraftfahrzeug-Anzeigevorrichtungen 101 und 101' weitergeleitet.

Alternativ kann das Kraftfahrzeug-Elektronikgerät 102 auch so ausgebildet sein, dass neben der Prüfung der Signatur der Nachricht 105' auch das zweite Signal von dem Kraftfahrzeug-Elektronikgerät 102 generiert wird. Wenn die Signaturprüfung ergibt, dass die Signatur der Nachricht 105' gültig ist, so wird von dem Kraftfahrzeug-Elektronikgerät 102 also das zweite Signal generiert, und über die Schnittstelle 143 und das Netzwerk 140 an die Kraftfahrzeug-Anzeigevorrichtungen 101 und 101' gesendet, sodass das zweite Signal von den Kraftfahrzeug-Anzeigevorrichtungen 101 und 101' optisch ausgegeben wird.

An das Netzwerk 140 kann ein Sensor 196 angeschlossen sein. Der Sensor 196 kann zur Erfassung eines Fahrzeugparameters, wie zum Beispiel eines umwelt- oder sicherheitsrelevanten Fahrzeugparameters, wie zum Beispiel eines Lärm- oder Abgasemissionswertes, ausgebildet sein. Der Sensor 196 liefert ein Sensorsignal, welches die entsprechende Information beinhaltet. Das Sensorsignal wird beispielsweise von dem Sensor 196 über das Netzwerk 140 an das Kraftfahrzeug-Elektronikgerät 102 gesendet, von dem dann eine Nachricht 105' generiert wird, die die von dem Sensor 196 gelieferte Information und eine mit Hilfe des privaten Schlüssels 114 generierte Signatur beinhaltet. Alternativ wird die Nachricht 105' von dem Sensor 196 selbst generiert. Diese Nachricht 105' wird dann von dem Kraftfahrzeug-Elektronikgerät 102 bzw. von dem Sensor 196 über das Netzwerk 140 an die Kraftfahrzeug-Anzeigevorrichtungen 101 und 101' gesendet.

Die Figur 5 zeigt eine weitere Ausführungsform der Erfindung. Zusätzlich zu der Ausführungsform der Figur 4 ist die Schnittstelle 116 des Kraftfahrzeug-Elektronikgeräts 102 dazu ausgebildet, mit einer entsprechenden Schnittstelle 160 eines ID-Tokens 180 zu kommunizieren. Der ID-Token 180 kann zum Beispiel als elektronischer Schlüssel ausgebildet sein. Der ID-Token 180 hat einen Speicher 182 zur Speicherung eines Schlüssel-Identifikators 184 des ID-Tokens 180. Bei dem Schlüssel-Identifikator handelt es sich um einen Identifikator, durch den der ID-Token 180 eindeutig oder nahezu eindeutig identifiziert wird.

Ein Referenzwert für diesen Schlüssel-Identifikator 184 ist in einem Speicherbereich 186 des Kraftfahrzeug-Elektronikgeräts 102 gespeichert.

Der Prozessor 120 des Kraftfahrzeug-Elektronikgeräts 102 dient hier zusätzlich zur Ausführung eines Steuerungsprogramms 188.

Durch Ausführung des Steuerungsprogramms 188 werden zyklisch Signale von der Schnittstelle 116 abgegeben. Wenn sich der ID-Token 180 in der Reichweite der Schnittstelle 116 befindet, so antwortet der ID-Token 180 auf ein solches Signal mit der Übertragung des Schlüssel-Identifikators 184 an die Schnittstelle 116, was durch Ausführung des Programms 190 von dem Prozessor 192 erfolgt. Das Steuerungsprogramm 188 prüft dann den über die Schnittstelle 116 empfangenen Schlüssel-Identifikator 184 mit dem in dem Speicherbereich 186 gespeicherten Referenzwert. Bei Übereinstimmung steuert das Steuerungsprogramm 188 eine Zentralverriegelung des Kraftfahrzeugs 100 an, um die Öffnung der Türen freizugeben. Alternativ oder zusätzlich kann das Steuerungsprogramm 188 die Betätigung des Anlassers des Kraftfahrzeugs 100 freigeben.

Wenn sich neben dem ID-Token 180 auch der ID-Token 134 innerhalb der Reichweite der Schnittstelle 116 befindet, so startet das Steuerungsprogramm 188 das Programmmodul 128 für die Aktualisierung des Kennzeichens.

**Bezugszeichenliste**

| | |
|---|---|
| 100 | Kraftfahrzeug |
| 101 | Kraftfahrzeug-Anzeigevorrichtung |
| 102 | Kraftfahrzeug-Elektronikgerät |
| 103 | Schnittstelle |
| 104 | Speicher |
| 105, 105' | Nachricht |
| 106 | Speicherbereich |
| 107, 107' | Sender |
| 108 | Speicherbereich |
| 109 | Daten |
| 110 | Speicherbereich |
| 111 | Chiffrat |
| 112 | Speicherbereich |
| 113, 113' | Zertifikat |
| 114 | Speicherbereich |
| 115 | elektronischer Speicher |
| 116 | Schnittstelle |
| 117 | Speicherbereich |
| 118 | Schnittstelle |
| 119 | Speicherbereich |
| 120 | Prozessor |
| 121 | Prozessor |
| 122 | Programmmodul |
| 123 | Programmmodul |
| 124 | Programmmodul |
| 125 | Programmmodul |
| 126 | Programmmodul |
| 127 | Programmmodul |
| 128 | Programmmodul |
| 129 | Programmmodul |
| 130 | Programmmodul |
| 131 | Speicherbereich |
| 132 | Programmmodul |
| 133 | Zertifikat |
| 134 | ID-Token |
| 135 | Speicherbereich |
| 136 | Display |
| 137 | Speicherbereich |
| 138 | Display |
| 139 | Programmmodul |
| 140 | Netzwerk |
| 142 | Anwendungsprogramm |
| 143 | Schnittstelle |
| 144, 144' | Speicher |
| 146 | Speicherbereich |
| 148 | Speicherbereich |
| 150, 150' | Speicherbereich |
| 152, 152' | Speicherbereich |
| 154, 154' | Prozessor |
| 156 | Programmmodul |
| 158, 158' | Programmmodul |
| 160, 160' | Schnittstelle |
| 162 | Terminal |
| 164 | Schnittstelle |
| 166 | Prozessor |
| 168 | Programm |
| 170 | Netzwerk-Schnittstelle |
| 172 | Servercomputer |
| 174 | Netzwerk |
| 176 | Datenbank |
| 178 | Root-Zertifikat |
| 180 | ID-Token |
| 182 | Speicher |
| 184 | Schlüssel-Identifikator |
| 186 | Speicherbereich |
| 188 | Steuerungsprogramm |
| 190 | Programms |
| 192 | Prozessor |
| 194 | Speicherbereich |
| 196 | Sensor |

## Patentansprüche

1. Kraftfahrzeug-Anzeigevorrichtung mit einem elektronischen Gerät beinhaltend:
- einen ersten Speicherbereich (117) zur Speicherung von Daten (109), wobei die Daten ein Kraftfahrzeug-Kennzeichen beinhalten,
- einen zweiten Speicherbereich (119) zur Speicherung zumindest eines ersten Zertifikats (178),
- eine erste Schnittstelle (103) zum Empfang eines ersten Signals (109') und einer Signatur (111', 113') des ersten Signals von einem Sender (107'),
- Mittel (123) zur Prüfung der Gültigkeit der Signatur des ersten Signals mit Hilfe des ersten Zertifikats,
- Mittel (139) zur Generierung eines zweiten Signals aufgrund des Empfangs des ersten Signals,
- Mittel (127) zur Ansteuerung einer Anzeigevorrichtung (136) zur Wiedergabe der in dem ersten Speicherbereich gespeicherten Daten und zur optischen Ausgabe des zweiten Signals,
wobei die Generierung und/oder die Ausgabe des zweiten Signals nur dann erfolgt, wenn die Signatur gültig ist.

2. Kraftfahrzeug-Anzeigevorrichtung nach Anspruch 1, wobei die Mittel zur Prüfung der Gültigkeit der Signatur zur Durchführung einer Zertifikatskettenprüfung mit Hilfe des ersten Zertifikats ausgebildet sind, und/oder wobei es sich bei dem elektronischen Gerät um eine integrierte elektronische Schaltung handelt und/oder wobei das elektronische Gerät und die Anzeigevorrichtung untrennbar miteinander verbunden sind und/oder wobei es sich bei der ersten Schnittstelle um eine Funk-Schnittstelle handelt.

3. Kraftfahrzeug-Anzeigevorrichtung nach Anspruch 1 oder 2, wobei die erste Schnittstelle zum Empfang von einem Kraftfahrzeug-Elektronikgerät (102) ausgebildet ist, wobei es sich bei der ersten Schnittstelle vorzugsweise um eine Kraftfahrzeug-Bussystem-Schnittstelle handelt.

4. Kraftfahrzeug-Anzeigevorrichtung nach einem der vorhergehenden Ansprüche, mit Mitteln (129) zur kryptografischen Authentifizierung des Senders, wobei die Generierung und/oder Ausgabe des zweiten Signals voraussetzt, dass die kryptografische Authentifizierung des Senders erfolgreich durchgeführt worden ist.

5. Kraftfahrzeug-Anzeigevorrichtung nach Anspruch 4, wobei in einem dritten Speicherbereich (135) des elektronischen Geräts ein zweites Zertifikat (133) gespeichert ist, wobei das zweite Zertifikat (133) dem elektronischen Gerät zugeordnet ist, und wobei die Mittel zur kryptografischen Authentifizierung zur gegenseitige Authentifizierung ausgebildet sind, wobei die Authentifizierung der Kraftfahrzeug-Anzeigevorrichtung gegenüber dem Sender mit Hilfe des zweiten Zertifikats erfolgt.

6. Kraftfahrzeug-Anzeigevorrichtung nach einem der vorhergehenden Ansprüche, wobei das zweite Signal das Kraftfahrzeug-Kennzeichen und/oder einen Fahrzeugparameter und/oder eine Gebühreninformation beinhaltet.

7. Kraftfahrzeug-Anzeigevorrichtung nach einem der vorhergehenden Ansprüche, wobei das zweite Signal mit einem privaten Schlüssel (137) der Kraftfahrzeug-Anzeigevorrichtung signiert ist, und die Signatur des zweiten Signals über die Anzeigevorrichtung optisch ausgegeben wird.

8. Kraftfahrzeug-Anzeigevorrichtung nach einem der vorhergehenden Ansprüche, mit einem vierten Speicherbereich (194) zur Speicherung eines Kraftfahrzeug-Identifikators, wobei der Kraftfahrzeug-Identifikator ein Kraftfahrzeug eindeutig identifiziert, welchem die Kraftfahrzeug-Anzeigevorrichtung zugeordnet ist, wobei es sich bei dem vierten Speicherbereich um einen geschützten Speicherbereich handelt, wobei die erste Schnittstelle zum Empfang einer Nachricht (105) ausgebildet ist, wobei die Nachricht zumindest das erste Signal, eine Kennung und die Signatur des ersten Signals und/oder der Kennung beinhaltet, und mit Mitteln (121) zur Prüfung, ob die Kennung mit dem in den vierten Speicherbereich gespeicherten Kraftfahrzeug-Identifikator übereinstimmt, wobei Voraussetzung für die Generierung und/oder ,Ausgabe des zweiten Signals ist, dass die Kennung und der Kraftfahrzeug-Identifikator übereinstimmen.

9. Kraftfahrzeug-Anzeigevorrichtung nach einem der vorhergehenden Ansprüche, wobei die Anzeigevorrichtung und das elektronische Gerät eine bauliche Einheit bilden.

10. Kraftfahrzeug-Elektroniksystem mit zumindest einer Kraftfahrzeug-Anzeigevorrichtung (101, 101') nach einem der vorhergehenden Ansprüche und mit einem Kraftfahrzeug-Elektronikgerät (102) mit
- einer zweiten Schnittstelle (116) zum Aufbau einer ersten Verbindung zu einem ersten ID-Token (134), um aus dem ersten ID-Token die Daten (109) auszulesen,
- einem fünften Speicherbereich (112) zur Speicherung des ersten Zertifikats (178),
- einem sechsten Speicherbereich (110) zur Speicherung eines dritten Zertifikats (113), wobei das dritte Zertifikat dem Kraftfahrzeug-Elektronikgerät zugeordnet ist,
- Mitteln (122) zur kryptografischen Authentifizierung gegenüber dem ersten ID-Token mit Hilfe des ersten und/oder des dritten Zertifikats,
- einer dritten Schnittstelle (118) zur Empfang der zumindest ersten, zweiten und dritten Zertifikate,
- einer vierten Schnittstelle (143) zur Ansteuerung zumindest einer der Kraftfahrzeug-Anzeigevorrichtungen (101, 101') über die erste Schnittstelle (103) zur Aktualisierung der Daten und der ersten und zweiten Zertifikate.

11. Kraftfahrzeug mit zumindest einer von außen sichtbar angeordneten Kraftfahrzeug-Anzeigevorrichtung (101, 101') nach einem der vorhergehenden Ansprüche 1 bis 9.

12. Verfahren zur optischen Ausgabe mit folgenden Schritten:
- Ansteuerung einer Anzeige (136) einer Kraftfahrzeug-Anzeigevorrichtung (101, 101') zur Anzeige von Daten (109), wobei die Daten ein Kraftfahrzeug-Kennzeichen beinhalten,
- Empfang eines ersten Signals (109') und einer Signatur (111', 113') des ersten Signals von einem Sender (107'),
- Prüfung der Gültigkeit der Signatur des ersten Signals mit Hilfe eines ersten Zertifikats (178),
- Generierung eines zweiten Signals aufgrund des Empfangs des ersten Signals,
- Ansteuerung der Anzeige (136) zur Wiedergabe der in dem ersten Speicherbereich gespeicherten Daten und zur optischen Ausgabe des zweiten Signals, wobei die Generierung und/oder die Ausgabe des zweiten Signals nur dann erfolgt, wenn die Signatur gültig ist.

13. Verfahren nach Anspruch 12, mit folgenden weiteren Schritten:
- Empfang der Daten (109) und einer Signatur (111, 113) der Daten ,
- Prüfung der Gültigkeit der Signatur der Daten mit Hilfe des ersten Zertifikats (178),
- Speicherung der Daten in einem ersten Speicherbereich (117), wenn deren Signatur gültig ist, wobei zur Anzeige der Daten auf den ersten Speicherbereich zugegriffen wird, wobei zur Prüfung der Gültigkeit der Signatur vorzugsweise eine Zertifikatskettenprüfung durchgeführt wird, wobei vorzugsweise Voraussetzung für die Generierung und/oder Ausgabe des zweiten Signals ist, dass eine Authentifizierung des Senders (107) durchgeführt worden ist, wobei vorzugsweise Voraussetzung für die Generierung und/oder Ausgabe des zweiten Signals zusätzlich ist, dass eine Authentifizierung der Kraftfahrzeug-Anzeigevorrichtung gegenüber dem Sender erfolgreich durchgeführt worden ist.

14. Verfahren nach einem der vorhergehenden Ansprüche 12 oder 13, wobei es sich bei dem Sender um ein Kraftfahrzeug-Elektronikgerät (102) handelt, und wobei das Kraftfahrzeug-Elektronikgerät das erste Signal von einem externen Sender (107') mit den folgenden Schritten empfängt:
- Aufbau einer ersten Verbindung zwischen dem Kraftfahrzeug-Elektronikgerät (102) und dem externen Sender,
- Zugriff auf einen Speicher (104) des Kraftfahrzeug-Elektronikgeräts zum Lesen eines dritten Zertifikats (113),
- einseitige oder gegenseitige kryptografische Authentifizierung des Kraftfahrzeug-Elektronikgeräts und des externen Senders mit Hilfe des Zertifikats (113),
- Empfang des ersten Signals und der Signatur des ersten Signals von dem externen Sender über die erste Verbindung, nachdem die Authentifizierung erfolgreich durchgeführt worden ist,
- Weiterleitung des ersten Signals und der Signatur des ersten Signals von dem Kraftfahrzeug-Elektronikgerät an die Kraftfahrzeug-Anzeigevorrichtung oder Generierung des zweiten Signals durch das Kraftfahrzeug-Elektronikgerät und Senden des zweiten Signals von dem Kraftfahrzeug-Elektronikgerät an die Kraftfahrzeug-Anzeigevorrichtung, wobei das zweite Signal vorzugsweise das Kraftfahrzeug-Kennzeichen und/oder einen Fahrzeugparameter und/oder eine Gebühreninformation beinhaltet und wobei das zweite Signal vorzugsweise mit einem privaten Schlüssel der Kraftfahrzeug-Anzeigevorrichtung signiert ist, und die Signatur des zweiten Signals vorzugsweise über die Anzeigevorrichtung optisch ausgegeben wird, unter der Voraussetzung, dass die Signatur des ersten Signals gültig ist.

15. Computerprogrammprodukt mit ausführbaren Programminstruktionen zur Durchführung eines Verfahrens nach einem der vorhergehenden Ansprüche 12 bis 14.

## Claims

1. A motor vehicle display apparatus with an electronic device containing:
- a first memory area (117) for storing data (109), wherein the data contain a motor vehicle licence number,
- a second memory area (119) for storing at least one first certificate (178),
- a first interface (103) for receiving a first signal (109') and a signature (111', 113') of the first signal from a transmitter (107'),
- means (123) for checking the validity of the signature of the first signal with the aid of the first certificate,
- means (139) for generating a second signal on the basis of the receipt of the first signal,
- means (127) for actuating a display apparatus (136) to reproduce the data stored in the first memory area and to visually output the second signal,
wherein the second signal is only then generated and/or output if the signature is valid.

2. The motor vehicle display apparatus according to Claim 1, wherein the means for checking the validity of the signature are designed to perform a certificate chain check with the aid of the first certificate, and/or wherein the electronic device is an integrated electronic circuit, and/or wherein the electronic device and the display apparatus are inseparably interconnected, and/or wherein the first interface is a radio interface.

3. The motor vehicle display apparatus according to Claim 1 or 2, wherein the first interface is designed to receive from a motor vehicle electronic device (102), wherein the first interface is preferably a motor vehicle bus system interface.

4. The motor vehicle display apparatus according to one of the preceding claims, with means (129) for cryptographic authentication of the transmitter, wherein the generation and/or output of the second signal presupposes that the cryptographic authentication of the transmitter has been performed successfully.

5. The motor vehicle display apparatus according to Claim 4, wherein, in a third memory area (135) of the electronic device, a second certificate (133) is stored, wherein the second certificate (133) is associated with the electronic device, and wherein the means for cryptographic authentication are designed for mutual authentication, wherein the motor vehicle display device is authenticated to the transmitter with the aid of the second certificate.

6. The motor vehicle display apparatus according to one of the preceding claims, wherein the second signal contains the motor vehicle licence number and/or a vehicle parameter and/or fee information.

7. The motor vehicle display apparatus according to one of the preceding claims, wherein the second signal is signed with a private key (137) of the motor vehicle display apparatus, and the signature of the second signal is output visually via the display apparatus.

8. The motor vehicle display apparatus according to one of the preceding claims, with a fourth memory area (194) for storing a motor vehicle identifier, wherein the motor vehicle identifier explicitly identifies a motor vehicle with which the motor vehicle display apparatus is associated, wherein the fourth memory area is a protected memory area, wherein the first interface is designed to receive a message (105), wherein the message contains at least the first signal, a tag and the signature of the first signal and/or of the tag, and with means (121) for checking whether the tag matches the motor vehicle identifier stored in the fourth memory area, wherein a prerequisite for the generation and/or output of the second signal is that the tag and the motor vehicle identifier match.

9. The motor vehicle display apparatus according to one of the preceding claims, wherein the display apparatus and the electronic device form a structural unit.

10. A motor vehicle electronics system with at least one motor vehicle display apparatus (101, 101') according to one of the preceding claims and with a motor vehicle electronic device (102) with
- a second interface (116) for setting up a first connection to a first ID token (134) in order to read out the data (109) from the first ID token,
- a fifth memory area (112) for storing the first certificate (178),
- a sixth memory area (110) for storing a third certificate (113), wherein the third certificate is associated with the motor vehicle electronic device,
- means (122) for cryptographic authentication to the first ID token with the aid of the first and/or third certificate,
- a third interface (118) for receiving the at least first, second and third certificate,
- a fourth interface (143) for actuating at least one of the motor vehicle display apparatuses (101, 101') via the first interface (103) to update the data and the first and second certificate.

11. A motor vehicle with at least one motor vehicle display apparatus (101, 101') according to one of the preceding claims 1 to 9, said motor vehicle display apparatus being arranged so as to be externally visible.

12. A method for visual output, said method comprising the following steps:
- a display (136) of a motor vehicle display apparatus (101, 101') is actuated to display data (109), wherein the data contain a motor vehicle licence number,
- a first signal (109') and a signature (111', 113') of the first signal are received from a transmitter (107'),
- the validity of the signature of the first signal is checked with the aid of a first certificate (178),
- a second signal is generated on the basis of the receipt of the first signal,
- the display (136) is actuated to reproduce the data stored in the first memory and to visually output the second signal, wherein the second signal is only then generated and/or output if the signature is valid.

13. The method according to Claim 12, said method comprising the following further steps:
- the data (109) and the signature (111, 113) of the data are received,
- the validity of the signature of the data is checked with the aid of the first certificate (178),
- the data are stored in a first memory area (117) if the signature of said data is valid, wherein the first memory area is accessed in order to display the data, wherein a certificate chain check is preferably performed in order to check the validity of the signature, wherein a prerequisite for the generation and/or output of the second signal is preferably the fact that the transmitter (107) has been authenticated, wherein a prerequisite for the generation and/or output of the second signal is preferably the fact that the vehicle display apparatus has been successfully authenticated to the transmitter.

14. The method according to one of the preceding Claims 12 or 13, wherein the transmitter is a motor vehicle electronic device (102), and wherein the motor vehicle electronic device receives the first signal from an external transmitter (107'), said method comprising the following steps:
- a first connection is set up between the motor vehicle electronic device (102) and the external transmitter,
- a memory (104) of the motor vehicle electronic device is accessed in order to read a third certificate (113),
- the motor vehicle electronic device and the external transmitter are cryptographically authenticated, either in a one-sided or mutual manner, with the aid of the certificate (113),
- the first signal and the signature of the first signal are received from the external transmitter via the first connection once the authentication has been performed successfully,
- the first signal and the signature of the first signal are forwarded from the motor vehicle electronic device to the motor vehicle display apparatus or the second signal is generated by the motor vehicle electronic device and the second signal is transmitted from the motor vehicle electronic device to the motor vehicle display apparatus, wherein the second signal preferably contains the motor vehicle licence number and/or a vehicle parameter and/or fee information, and wherein the second signal is preferably signed with a private key of the motor vehicle display apparatus, and the signature of the second signal is preferably output visually via the display apparatus, subject to the prerequisite that the signature of the first signal is valid.

15. A computer program product with executable program instructions for carrying out a method according to one of the preceding Claims 12 to 14.

## Revendications

1. Dispositif d'affichage de véhicule automobile avec un appareil électronique, comprenant :
- une première zone de stockage (117) pour le stockage de données (109), où les données contiennent une immatriculation de véhicule automobile,
- une deuxième zone de stockage (119) pour le stockage d'au moins un premier certificat (178),
- une première interface (103) pour la réception d'un premier signal (109') et d'une signature (111', 113') du premier signal par un expéditeur (107'),
- des moyens (123) pour la vérification de la validité de la signature du premier signal, à l'aide du premier certificat,
- des moyens (139) pour la génération d'un deuxième signal suite à la réception du premier signal,
- des moyens (127) pour l'actionnement d'un dispositif d'affichage (136) destiné à la reproduction des données stockées dans la première zone de stockage et pour l'émission optique du deuxième signal,
dans lequel la génération et/ou l'émission du deuxième signal n'ont lieu que si la signature est valide.

2. Dispositif d'affichage de véhicule automobile selon la revendication 1, dans lequel les moyens pour la vérification de la validité de la signature sont conçus pour effectuer une vérification d'une chaîne de certificat, et/ou dans lequel l'appareil électronique est un circuit électronique intégré et/ou dans lequel l'appareil électronique et le dispositif d'affichage sont reliés entre eux de façon inséparable, et/ou dans lequel la première interface est une interface radio.

3. Dispositif d'affichage de véhicule automobile selon la revendication 1 ou 2, dans lequel la première interface est conçue pour la réception à partir d'un appareil électronique de véhicule automobile (102), dans lequel la première interface est de préférence une interface à système de bus pour véhicule automobile.

4. Dispositif d'affichage de véhicule automobile selon l'une des revendications précédentes, avec des moyens (129) pour l'authentification cryptographique de l'expéditeur, dans lequel la génération et/ou l'émission du deuxième signal suppose que l'authentification cryptographique de l'expéditeur a réussi.

5. Dispositif d'affichage de véhicule automobile selon la revendication 4, dans lequel un deuxième certificat (133) est stocké dans une troisième zone de stockage (135) de l'appareil électronique, dans lequel le deuxième certificat (133) est attribué à l'appareil électronique, et dans lequel les moyens pour l'authentification cryptographique sont conçus pour l'authentification mutuelle, dans lequel l'authentification du dispositif d'affichage de véhicule automobile vis-à-vis de l'expéditeur est réalisée à l'aide du deuxième certificat.

6. Dispositif d'affichage de véhicule automobile selon l'une des revendications précédentes, dans lequel le deuxième signal contient l'immatriculation du véhicule automobile et/ou un paramètre de véhicule et/ou une information tarifaire.

7. Dispositif d'affichage de véhicule automobile selon l'une des revendications précédentes, dans lequel le deuxième signal est signé à l'aide d'une clé privée (137) du dispositif d'affichage de véhicule automobile, et la signature du deuxième signal est affichée optiquement par le dispositif d'affichage.

8. Dispositif d'affichage de véhicule automobile selon l'une des revendications précédentes, avec une quatrième zone de stockage (194) pour le stockage d'un identifiant de véhicule automobile, dans lequel l'identifiant de véhicule automobile identifie clairement un véhicule automobile auquel le dispositif d'affichage est attribué, dans lequel la quatrième zone de stockage est une zone de stockage protégée, dans lequel la première interface est conçue pour recevoir un message (105), dans lequel le message contient au moins le premier signal, un identificateur et la signature du premier signal et/ou de l'identificateur, et avec des moyens (121) pour contrôler si l'identificateur concorde avec l'identifiant de véhicule automobile stocké dans la quatrième zone de stockage, dans lequel la condition pour la génération et/ou l'émission du deuxième signal est la concordance de l'identificateur avec l'identifiant de véhicule automobile.

9. Dispositif d'affichage de véhicule automobile selon l'une des revendications précédentes, dans lequel le dispositif d'affichage et l'appareil électronique forment une unité de construction.

10. Système électronique de véhicule automobile, avec au moins un dispositif d'affichage de véhicule automobile (101, 101') selon l'une des revendications précédentes et avec un appareil électronique de véhicule automobile (102), avec
- une deuxième interface (116) pour l'établissement d'une première liaison vers un premier jeton d'identification (134), pour lire les données (109) à partir du premier jeton d'identification,
- une cinquième zone de stockage (112) pour le stockage du premier certificat (178),
- une sixième zone de stockage (110) pour le stockage d'un troisième certificat (113), dans lequel le troisième certificat est attribué à l'appareil électronique du véhicule automobile,
- des moyens (122) pour l'authentification cryptographique par rapport au premier jeton d'identification, à l'aide du premier et/ou du troisième certificat,
- une troisième interface (118) pour la réception des au moins un premier, deuxième et troisième certificat,
- une quatrième interface (143) pour l'actionnement d'au moins l'un des dispositif d'affichage de véhicule automobile (101, 101') par le biais de la première interface (103), pour l'actualisation des données et des premier et deuxième certificats.

11. Véhicule automobile avec au moins un dispositif d'affichage de véhicule automobile (101, 101') agencé de façon à être visible de l'extérieur, selon l'une des revendications 1 à 9.

12. Procédé pour l'émission optique, avec les étapes suivantes :
- actionnement d'un affichage (136) d'un dispositif d'affichage de véhicule automobile (101, 101') pour l'affichage de données (109), les données contenant une immatriculation de véhicule automobile,
- réception d'un premier signal (109') et d'une signature (111', 113') du premier signal par un expéditeur (107'),
- contrôle de la validité de la signature du premier signal, à l'aide d'un premier certificat (178),
- génération d'un deuxième signal suite à la réception du premier signal,
- actionnement de l'affichage (136) pour la reproduction des données stockées dans la première mémoire et pour l'émission optique du deuxième signal, la génération et/ou l'émission du deuxième signal n'ayant lieu que si la signature est valide.

13. Procédé selon la revendication 12, avec les étapes supplémentaires suivantes :
réception des données (109) et d'une signature (111, 113) des données,
- contrôle de la validité de la signature des données, à l'aide du premier certificat (178),
- stockage des données dans une première zone de stockage (117) lorsque la signature est valide, dans lequel la première zone de stockage est sollicitée pour l'affichage des données, dans lequel un contrôle de la chaîne de certificat est de préférence effectué pour le contrôle de la validité de la signature, dans lequel la génération et/ou l'émission du deuxième signal dépendent de préférence de l'exécution d'une authentification de l'expéditeur (107), dans lequel la génération et/ou l'émission du deuxième signal dépendent de préférence également de la réussite de l'authentification du dispositif d'affichage de véhicule automobile par rapport à l'expéditeur.

14. Procédé selon l'une des revendications précédentes 12 ou 13, dans lequel l'expéditeur est un appareil électronique de véhicule automobile (102), et dans lequel l'appareil électronique de véhicule automobile reçoit le premier signal par un expéditeur externe (107'), avec les étapes suivantes,
- établissement d'une liaison entre l'appareil électronique de véhicule automobile (102) et l'expéditeur externe,
- accès à une mémoire (104) de l'appareil électronique pour la lecture d'un troisième certificat (113),
- authentification cryptographique unilatérale ou mutuelle de l'appareil électronique de véhicule automobile et de l'expéditeur externe, à l'aide du certificat (113),
- réception du premier signal et de la signature du premier signal de l'expéditeur externe par la première liaison, une fois que l'authentification a réussi,
- transmission du premier signal et de la signature du premier signal, de l'appareil électronique de véhicule automobile au dispositif d'affichage de véhicule automobile, ou génération du deuxième signal par l'appareil électronique et envoi du deuxième signal depuis l'appareil électronique de véhicule automobile vers le dispositif d'affichage de véhicule automobile, dans lequel le deuxième signal contient de préférence l'immatriculation du véhicule automobile et/ou un paramètre de véhicule et/ou une information tarifaire, et dans lequel le deuxième signal est de préférence signé à l'aide d'une clé privée du dispositif d'affichage de véhicule automobile, et la signature du deuxième signal est de préférence affichée optiquement par le dispositif d'affichage, à condition que la signature du premier signal soit valide.

15. Produit de programme informatique avec des instructions de programme exécutables, pour l'exécution d'un procédé selon l'une des revendications 12 à 14.
